# EUROPEAN PATENT APPLICATION

(11) **EP 1 677 187 A1**
(43) Date of publication of application: **05.07.2006**
(21) Application number: 04425966.1
(22) Date of filing: 31.12.2004
(51) Int. Cl.: G06F 9/44

(54) **A software development method**

(71) Applicant: Laurenzi, Anna Rita, 67015 Montereale (AQ) (IT)
(72) Inventor: Laurenzi, Anna Rita, 67015 Montereale (AQ) (IT)
(74) Representative: Sarpi, Maurizio

(57) **Abstract**

It is object of the present invention a Methodology to model and use scenarios in the software development process. According to the invention " scenario" as key artifacts to describe system external behaviour, is considered as a crucial concept of the software specification phase and testing phase.

The aim of this methodology is to support the scenario life cycle during the requirements engineering process as well as to support the reuse of the scenario artifacts in the entire system development process.

## Description

### Field of the invention

It is object of the present invention a method to model and use scenarios in the software development process.

### Objective of the invention

According to the invention "scenario" as key artifacts to describe system external behaviour, is considered as a crucial concept of the software specification phase and testing phase.

The aim of this method is to support the scenario life cycle during the requirements engineering process as well as to support the reuse of the scenario artifacts in the entire system development process, remaining on level of scenario specification and consistently describe scenarios at the same time as test descriptions. The main features of the present method are: :
a scenario model defined through a new structure with a precise syntax and semantic;
an XML schema that formally describes the syntax and semantic for the scenario model providing great expressiveness and unambiguous interaction semantics;
a set of five phases and activities that allow to construct and reuse scenario model during the entire software development process, described as follows: definition, refinement, composition , transformation, validation;
an algorithm that generates all the possible interaction flow in order to derive from the scenario model other models such as test models and behaviour model, using a set of transformation rules;
an integrated environment, made up of four different views, that allows to capture scenarios from the user requirements engineering and allows to manipulate the scenarios, using XML technologies, to aid in the software development process. The views are described in the following:
   - a design view that allows to create scenarios in a natural way,
   - a presentation view based on graphical and hypertextual representation for scenario model, that allows the analyst to explain and validate software requirements with non-computer experts and at the same time allows to show the scenario composition in a diagrammatic view that helps to better understand the overall functionality of the system,
   - a state diagram view, that visualizes the flow of interaction from a system-centered view, enabling the revision of the scenario model artifacts, identifying inconsistencies and lacks of information in the scenario model,
   - a test case view representation, which is a textual representation that allows to follow the entire flow of interaction generated during the scenario composition

In this invention, the composition of scenarios allows creating first a macro view of the scenario model, and then to distribute the development and refinement of each scenario identified among the developers team. The consistency between scenarios is ensured by the Scenario Model schema. The scenario model supports scenario evolution in order to identify the right level of granularity and abstraction during scenario development and usage.

From the usage context point of view, our scenario model is mainly focused on the description of user-system interactions, although it can also describe internal system interactions (which do not include user actions), supporting the black-box and white-box principles. Moreover, our approach allows to argument the interaction flow by introducing alternative and exception flows. Following the black-box and white-box principles and introducing variants, it helps to improve the completeness of software specifications.

The main technical advantages of the scenario model structure can be summarized as follows:
- it can be used to provide a complete specification of a system's behaviour, including not only the behaviour expressed in a single scenarios but also behaviour that spans more than one scenarios;
- this structure helps to avoid the explosion of scenarios that occur if we try to simply list all the possible scenarios. Thanks to this the flow of interaction are not written in isolation but are linked together, keeping scenarios persistent; the unification and the integration of such scenarios contributes to improving the quality of those scenarios, guiding the process of completion.

This invention permits to overcome the known gap between the requirements specification and testing requirements thanks to the use of an unique scenario model from which it is possible to derive test descriptions providing several views of the same information to the user during the same scenario model construction.

Respect to the others known specification techniques based on graphical model (i.e. use case model) our solution focus on the scenario because allows to formalize all the possible external behaviours of the system.

### DESCRIPTION OF THE PRIOR ART

Scenario is considered as a natural mean both for eliciting and formalizing software requirements in the requirements engineering process and to reuse software specification through software engineering process. Scenarios written in natural language improve communication between the different groups involved in system development. In particular, they promote the communication between domain experts, customers and software developers, so that these users do not need to learn special languages or notations to understand scenarios. The primary value of scenarios is their simplicity. In fact, users can easily describe concrete examples that show the way they do their job. However, when used in an undisciplined manner, scenarios can also be incomplete, unfocused and extremely inefficient to define and analyze the entire extenal behaviour of the system.

In literature the common way to formalize scenarios is through textual descriptions. Many different meanings are associated to the notion of scenario, and various modeling techniques such as scenario trees and other graphical representations may also be used instead of or in addition to textual descriptions. Hurlbut's thesis surveyed and compared nearly sixty different notations and use for scenario. Many methodologies available differ on many aspects, depending on the definition and the notation used. Many authors, (e.g. Glinz), consider the notion of scenario as a synonymous of use case. Others as an instance or a description of use case (this is e.g. the UML view). There is not a precise definition of a scenario may depend on the used semantics and notations, but most definitions include the notion of a partial description of system usage as seen by its users or by related systems. The literature presents a large variety of types and formats for scenarios . See "C. Rolland, C. Ben Achour, C. Cauvet, J. Ralyte, A. Sutcliffe, N.A.M. Maiden, M. Jarke, P. Haumer, K. Pohl, E. Dubois, and P. Heymans, "A Proposal for a Scenario Classification Framework," Requirements Engineering Journal, Vol. 3, No. 1, 1998, pp. 23-47".

So far only few tools are available to support the scenario life cycle and the scenario management. Moreover, different views of the same scenario would be useful. Indeed, a project manager often needs only to understand a scenario on an abstract level, while developers and domain experts require a more detailed scenario description. To enable such views on a single scenario, some approaches use two kinds of scenario models: a graphical one, providing enough information for managers, and a detailed scenario description for domain experts and developers. Although these models are developed in parallel, keeping them consistent often introduces other problems to handle.

Many approaches discuss how to extend the usual scenario notation in order to reuse scenarios in the system development process. The advantage of representing scenarios in natural language in the requirements analysis becomes a disadvantage in the reuse of scenarios in system development. In particular, natural language scenarios are hard to analyze, and it is heavy to keep them consistent and up-to-date, and to prove their completeness. Moreover, scenarios do not include quality and non-functional requirements and seem to be only adapt to depict a system in black-box view and from the user's perspective, while they are not appropriate for capturing internal system interaction. To overcome these problems, Johannes Ryser , and Martin Glinz in Dependency Chart as a Means to Model Inter-Scenario Dependencies. (2001), disclose as a state chart can be generated from a scenario. Using a state chart, inconsistencies and redundancy can be detected and resolved; however, this approach has some drawbacks, too: in fact, there is no formal way to convert natural language scenarios into state charts, which represent another error-prone intermediate modeling step.

Most of the approaches remark that scenario and test cases share the same information and, consequently, many researches are oriented in this direction. It is not easy to use scenarios for to systematically develop test cases from them:..A scenario needs to be formalized in order to be further used, however, many of the advantages of scenarios would be lost if they were formalized. Reusing software artifacts created in the analysis phase may improve efficiency in test design and reduce cost and time pressure. However, deriving a formal specification and a detailed design from informal requirements can be a tedious and error-prone task unless a methodical or rigorous approach is used. There are a lot of approaches to derive test cases from specifications, as surveyed in J. Ryser, S. Berner, M. Glinz, "On the State of the Art in Requirements-based Validation and Test of Software," Universität Zürich, Institut für Informatik, Zürich, Berichte des Instituts für Informatik 98.12, Nov 1998.

Almost all approaches are oriented on the reuse of scenarios through the software development process, damaging the quality of software specification. As remarked by several authors (e.g. Cockburn, Duran, Leite, Glinz), to preserve the use of natural language for scenarios description is a limit for the reuse of them in other phases. Our work arises from the need to formalise scenarios in a way suitable to preserve all the advantages of the natural language descriptions and at the same time formal enough (the use of XML being a natural choice) to allow the derivation of other forms of specifications (e.g., test cases).

In conclusion, a lot of research has been recently done in the last years on the subject of scenarios and a variety of formalisms and techniques has been developed. However, the lack of a tool for the automatic support of the specification process, in order to use and re-use scenarios, is strongly influenced by the following factors:
- the consistency of the terminology;
- the abstraction of interaction patterns occurring in different scenarios;
- the possibility of formally describe how to integrate, from the user point of view, different scenarios already analyzed and well understood by the end-user;
- the possibility to give different views on scenarios, with different abstraction levels, both for project managers and for developers;
- the ability to discover and manage alternative and exception behaviors;

A development process representation and management is disclosed in US 2004143811. In particular, in development and test phase, the notion of scenario is highlighted, both at the design stage and implementation stage. However there is not indication about the structure and the semantic of the scenario and the scenario model.

EP1205841 describes a software development method comprising the steps of defining process workflows for use cases and roles. Is is defined a metamodel that represent use cases at different levels of abstraction and in different contest. Also the metamodel comprises refinement relationship linking views of processes at different levels of detail to provide traceability. There is not mention of scenario model as defined in the present invention and not phases are indicated to construct it.

The use of XML document to specify an application graphical user interface is disclosed in WO0223336. In this invention the advantage of the use of XML is illustrated and confirm the potential benefits of this formalization.

US6,725,399 B1 describes a method for testing computer software. The aim of the second of the six process area, i.e development of test cases to support test plan, is to produce both test procedure and test data. This test procedure could be obtained directly from the scenario used in analysis phase. However, in this application scenario is not used to generate test.

In US2002104068 a software development process is disclosed, wherein in the requirement and specifications phases, a number of different UML model diagrams are used to record different aspects of the desired system. This model are recorded in a file in an XMI/XML form. However the semantic and syntax of the scenario and the scenario model (where scenario is not synonymous of use cases) are not formalized in XMI/XML form. So the potential benefits of the scenario are lost.

The main difference between our approach and other ones is in the concept of scenario. Actually, many approaches, consider "scenario" and "usecase" as synonymous, while other consider scenario as a path inside usecase. From our point of view, scenarios and usecases are considered distinct elements. We focus our attention on the scenario and not on the usecase for the following reasons:
- the use case approach enforces a usage-oriented decomposition of the requirements analysis problem from the very beginning. Considering only one business process or task at a time reduces the number of system aspects the stakeholder must cope with simultaneously. For this reason the use case approach often needs to be extended with the narrative description of the behavioral of the system;
- in most popular modeling languages there is no predefined way to represent and model scenarios. As an example, UML offers different notations and concepts that can help to describe requirements, such as sequence diagrams, activity diagrams or collaboration diagrams. However such diagrams are better suited for system design (and implementation) than for requirements gathering, since they unnecessarily force early design decisions, such as object identification and still lack of necessary concepts. Note that the Use Case Map (UCM) contains a notion for scenarios that is, however, mainly oriented to telecommunication systems.

The present invention will be more clearly understood from the following description of some embodiments ,given by way of example with reference to the accompanying drawings in which-:
Fig. 1 shows the structure used to define scenario;
Fig.2 shows the structure of mainflow;
Fig.3 shows the structure of the vocabulary;
Fig.4 shows the main flow with its refinement;
Fig. 5 shows the exception flow;
Fig.6 shows the alternatives flow;
Fig. 7 shows the specialized scenario from fig. 1 in order to obtain simple and composite scenario;
Fig.8 shows the structure of scenario model;
Fig.9 shows an overview of the scenario model schema;
Fig.10 shows the actor list schema;
Fig.11 shows item list schema;
Figg.12,13,14 show fragment of scenario XML documents;
Fig.15 shows scenario model and simple scenario visualization;
Fig.16 shows scenario model and composite scenario visualization;
Fig.17 is an overview of phases to construct an use scenario model;
Fig.18 describes the use of path generation algorithm;
Fig.19 shows the XML schema for test cases;
Fig.20 shows the interaction flow element of a test cases;
Fig.21 shows the test cases rapresentation;
Fig.22 shows the behaviour model schema;
Fig.23 shows the detailed behaviour model schema;
Fig.24 shows the state diagram representation;

In the following section we describe in detail the object of the present invention.

### DETAILED DESCRIPTION OF THE INVENTION

### SCENARIO MODEL : SYNTAX, SEMANTIC AND XML SCHEMA.

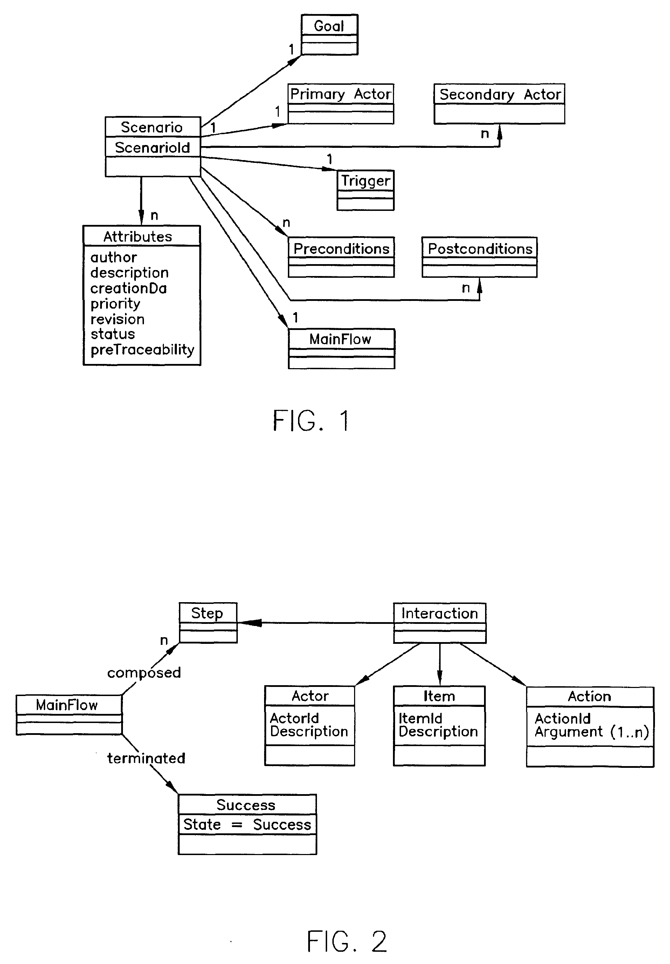

With reference to fig. 1 its basic elements are defined as follows:
- **Scenario:** is an ordered set of interactions that occurs under certain conditions (precondition), to achieve the primary actor's goal.
- **identifier** is a string that uniquely identifies a given scenario.
- **Attributes:** are used to describe the metadata of the scenario:
   - **author** creates the scenario and manages it;
   - **description** summarizes the aim of the scenario;
   - **creationDate:** is the date and the time at which the scenario was initially created;
   - **priority:** assigns a priority to the scenario;
   - **revision:** is the revision number for the scenario;
   - **status:** indicates one of the three levels (approved, not-approved, pending) of a scenario;
   - **preTraceability:** identifies the user requirements satisfied by the scenario.
- **Goal:** is defined as something that some stakeholder hopes to achieve in the future. In other words, the goal is the result expected from the execution of the user system interactions. In literature, the goals represent specific functionality required of the software system. In some cases, goals can be separated in two categories: system interaction goals and user goals. System interaction goals reflect things that user is doing with the system. User goals are what the user wants to achieve from the system (Fowler & Scott, 1997). In our case we refer to "system interaction" as interaction and to "user goal" as goal.
- **Actors:** they can be a person or another computer system or organization structures that have a role in the scenario. Usually, actors are parties outside the system that interact with the system [0047]. As in Cockburn [0053], we distinguish between primary and secondary actors:
   - **Primary actor:** A primary actor is one having a goal requiring the assistance of the system Essentially, they are external entities that will eventually interact with the system to achieve a desired goal;
   - **Secondary actor:** is an agent that gives assistance to the system, to satisfy the primary actor's goal.
- **Trigger:** is an event that causes the execution of the user-system interaction. The triggering event is usually initiated by an actor.
- **Precondition:** characterizes the condition under which the goal may be achieved. If no condition is declared, then the goal is not dependent on any other goal or scenario. In other words, precondition expresses what the scenario expects to be true when it starts.
- **Postcondition:** indicates what will be the result after the execution of the sequence of interactions. This holds both when the scenario terminates successfully and when it fails.
- **Main flow :** describes a sequence of interactions that terminate with success, and has an internal organization as shown below.

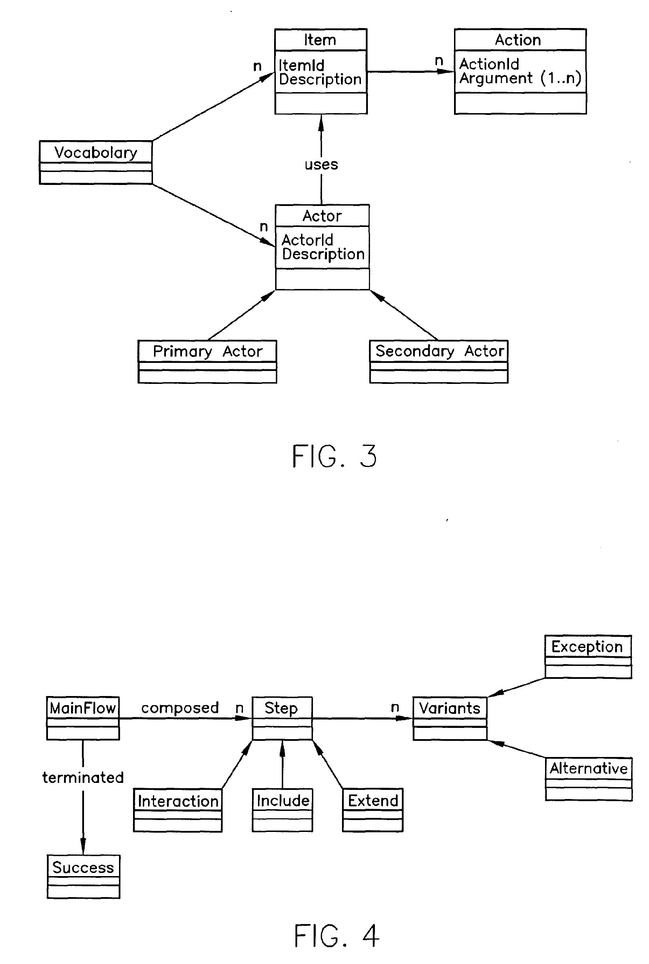

According to fig.2, we define the following elements:
- **Step:** corresponds to the interactions between actors to achieve the goal of the scenario. The interactions are structured in one or more steps, each one is identified by an id attribute and described as a structures sentence of the form subject (actor) - verb (action) - object (item). This approach preserves all the advantages of the natural language representation but, at the same time, allows to handle scenarios automatically.
- **Interaction:** consists of an actor that performs an action over an item.
- **Item:** is a relevant physical element or information that must be available in the scenario.
- **Action:** specifies a particular operation over an item.
- **Success:** indicates the successful termination of the interaction flow.

According to fig.3, a vocabulary is made up of a set of actors and items where:
each actor has a name attribute and two other attributes specifying the unique identifier of the actor and the actor type (internal or external), respectively. The description contains a textual description of the actor, while interactions contain zero or more items that can be used by the actor to interact with the system.

Each item has a name attribute and an id attribute specifying the unique identifier of the item. The description contains a textual description of the item. For each item we also define a list of actions applicable to it.

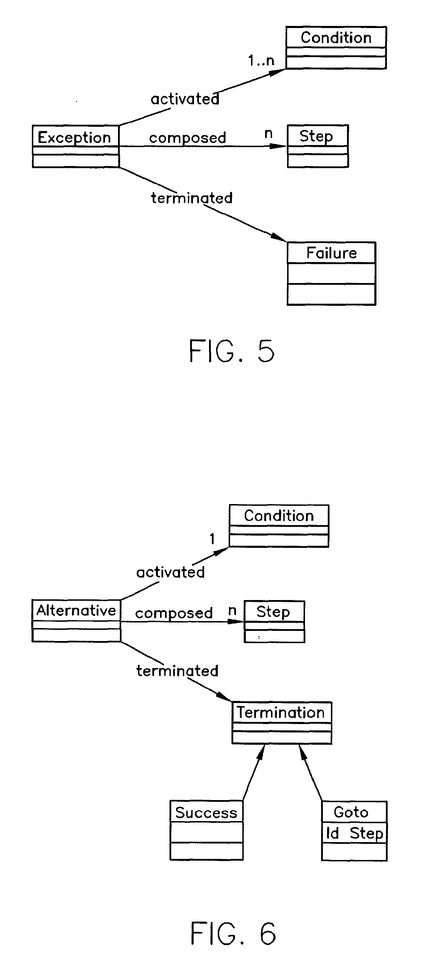

The fig.4 extends the fig.2 with refinement elements (variants, include extend). Defined as follows:
- **Extend:** this notion is inherited from Jacobson and defines the relation between a main flow of interactions and a separate scenario that contains an optional flow of interactions. Extensions may take place depending on conditions that cannot be explicitly detailed. However, the extension can be activated only if their trigger is satisfied.
- **Include:** defines a relation between scenarios with common sequence of interactions. When the same set of interactions occurs in two or more flows with the same behavior, it is possible to abstract this set of interactions creating a new scenario. In the flows, the set of interactions is replaced by a reference to the new scenario. The concept of inclusion is thus analogous to the notion of calling a subroutine, and allows to reuse scenarios and avoid duplication of flows.
- **Variant:** defines a relation between a main flow of interactions and the subflows containing exceptions or alternatives. Variants are included as part of mainflow and not as a separate scenario and ramify from a main flow interaction under a particular condition. There are two types of variant described respectfively in fig.5 and 6.:

- **exceptions:** introduce a subflow of interactions that represent obstacles to the goal achievement. An exception consists of an activation condition that enables the execution of an interaction flow, structured in one or more steps, ending with "failure".;
- **alternatives:** introduce alternative control flows for a group of interactions. An alternative consists of an activation condition that enables the execution of an interaction flow, structured in one or more steps, ending with "goto" or "success".

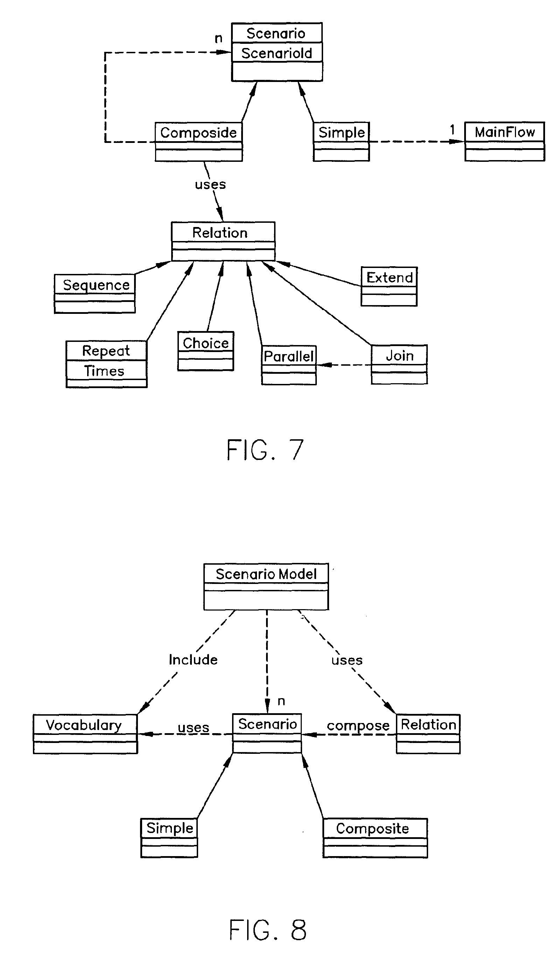

The Fig. 7 shows the specialized scenario from fig. 1 in order to obtain simple and composite scenario. We defined the following elements:
- **Simple Scenarios:** contain a main flow of interaction and its refinements.
- **Composite Scenarios:** contain a set of scenarios composed through the following six types of relation:
   - **sequence:** defines a sequential composition between scenarios
   - **choice:** denotes a mutually-exclusive parallel composition
   - **repeat:** scenario execution is repeated for the number of times specified by a times attribute, or forever if such attribute is not specified
   - **parallel:** defines a concurrent execution of two or more scenarios.
   - **join:** is the sequence of a parallel composition and a scenario
   - **extend:** enables the execution of an optional scenario.

These relations can be applied recursively, thus producing nested levels of composition, and are defined as follows.

According to the invention we defined the following semantic for each of the previous six relations. Let S1 and S2 be scenarios.
If precondition(S2)=postcondition(S1) and primaryActor(S1)=primaryActor(S2), then S = **Sequence** (S1, S2) is a scenario such that:
- goal(S)= goal(S2) and goal(S1)
- primaryActor(S)=primaryActor(S1)
- trigger(S)=trigger(S1)
- precondition(S)=precondition(S1)
- postcondition(S)=postcondition(S2)
- flows of interactions (S) are obtained combining the flows of interactions(S1) and flows of interactions(S2)
   **Repeat** (S1, N)= S is a scenario that repeats scenario S1 n times. S is such that:
- goal(S)= goal(S1)
- primaryActor(S)=primaryActor(S1)
- trigger(S)=trigger(S1)
- precondition(S)=precondition(S1)
- postcondition(S)=postcondition(S1)
- flows of interactions (S) are obtained adding a condition at the end of mainflow(S1) in order to repeat flows of interactions(S1) until condition is satisfied.
   **choice** (S1,S2)= S is a scenario such that S=S1 or S=S2
   **Parallel** (S1,S2)= S is a scenario such that flow of interactions(S) are obtained through parallel execution of the flows of interactions(S1) and flows of interactions(S2)
   If primaryActor(S1)=primaryActor(S2) and S1= parallel(S1.1, S1.2), then S=**Join** (S1,S2), such that:
- goal(S)= goal(S2) and goal(S1)
- primaryActor(S)=primaryActor(S1)
- trigger(S)=trigger(S1)
- precondition (S2) c postcondition(S1.1) and postcondition(S1.2)
- precondition(S) = precondition(S1)
- postcondition(S) = postcondition(S2)
- flows of interactions(S) are obtained through parallel execution of the flows of interactions(S1.1) extended with flows of interactions (S2) and flow of interactions(S1.2) extended with flows of interactions (S2)
   **Extend** (S1,S2)=S is a scenario in which S2 may extend S1, such that:
- goal(S)= goal(S1)
- primaryActor(S)=primaryActor(S1)
- trigger(S)=trigger(S1)
- precondition (S1) c precondition(S)
- postcondition(S) ⊃ postcondition(S1) and postcondition(S2)
- flows of interactions (S) are obtained extending the flows of interactions (S1) with the flows of interactions (S2)

According to a main feature of the invention , we define the scenario model, as shows in fig. 8:
Scenario model is a set of scenarios both simple and composite referred to one or more vocabolary.This allows to give a precise semantics to each object referred in the scenario model and to share the domain knowledge between different scenarios.

Further, these scenario model structure allows to support different type of granularity. The meaning of granularity in our scenario model is described as follows:
- first level: in this case the granularity of the Scenario Model is represented by "composite scenario", obtained by composing scenario through composition rules,
- second level: granularity of the Scenario Model is represented by the "scenario" that encapsulates only main flow of interaction ,
   third level: granularity of the Scenario Model is represented by the "scenario" that encapsulates main flow of interaction and its refinements.

In accordance with a preferred embodiment of the invention, we have formalized the scenario model structure and semantic through an XML Schema..

The choice of XML as the language definition formalism has been motivated by several reasons:
- XML documents are written in plain text, and they are therefore easy to read and modify even without the support of an editing framework. This speeds considerably up the development of the associated methodology, since it allows to experiment the language from the very beginning and change it as needed without having to write additional code.
- Even if text-based, XML documents can be associated with a very formal specification, namely an XML Schema, which enforces structural constraints and data types in the instance documents. Libraries to check the correctness of XML documents against such specifications are widely known and very efficient, and this allows to easily verify some (even complex) correctness properties of SDML specifications through few lines of code.
- As far as the editing environment is concerned, the development was helped by the intrinsic machine-readability of the XML data. Indeed, XML structures can be easily read and manipulated through the standard DOM model. The DOM libraries are available on every platform and programming language: indeed, our editing environment was easily designed as a web application, to help concurrent project activities.
- XML documents can be easily transformed in other structured documents written in different languages, thus making our approach very portable. Moreover, we used XSLT transformations also to obtain, from the scenario models formalized in SDML, the other models used in the SMDP (e.g., behavior models). These transformations are direct and do not rely on any intermediate formalism, thus giving a high degree of consistency to our framework.
- Creating an effective visualization of scenarios, in particular composite scenarios, is often a difficult task. Using XSLT, we are able to design a complete visualization system that can be used from any web browser. This visualization takes advantage of the most recent technologies used in web page design to create a dynamic view on the scenarios that can be collapsed or exploded to look at the specification from different points of view and at various detail levels.

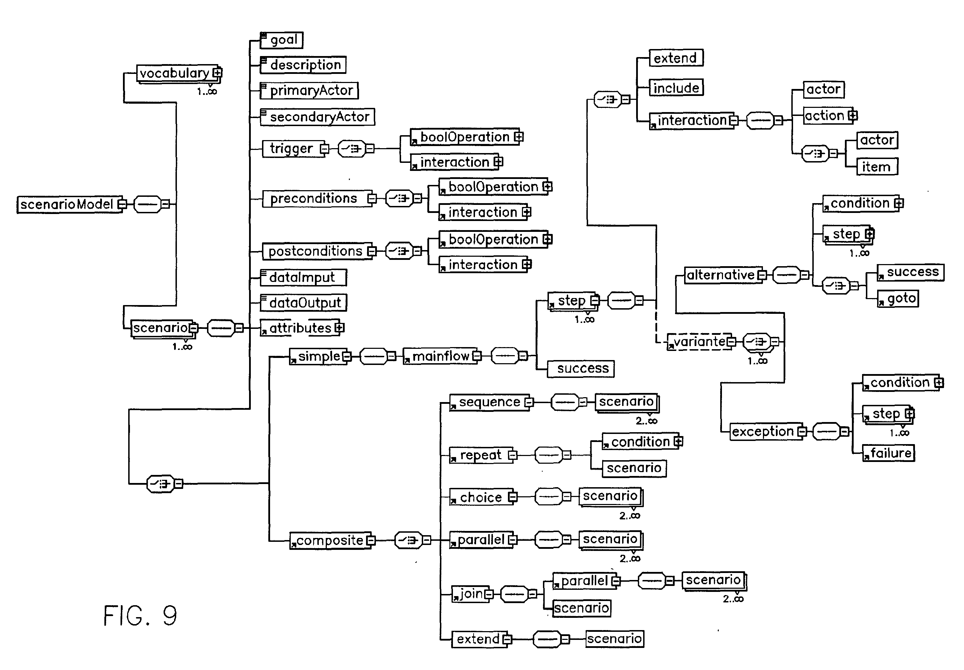

According to fig.9 the scenario model schema can be described as follows:

The XML documents described with the scenario model schema begins with the < ScenarioModel > element and contains one or more <vocabulary> elements and one or more <scenario> elements.

To make consistent the scenario model knowledge, we use a precise application domain formalized through the notion of vocabulary as a set of actors and items. All the actors and items in this chema are defined in object-oriented structures that formally describe their properties (attributes) and the actions that can be applied on them (methods). All the actors and items that belong to a particular domain are then grouped in separate documents and assigned to a *namespace* The scenario model can then import one or more namespaces that refer to the particular application domain. This allows to give a precise semantics to each object referred in the scenario and to share the domain knowledge between different scenarios improving the reuse domain knowledge between projects.

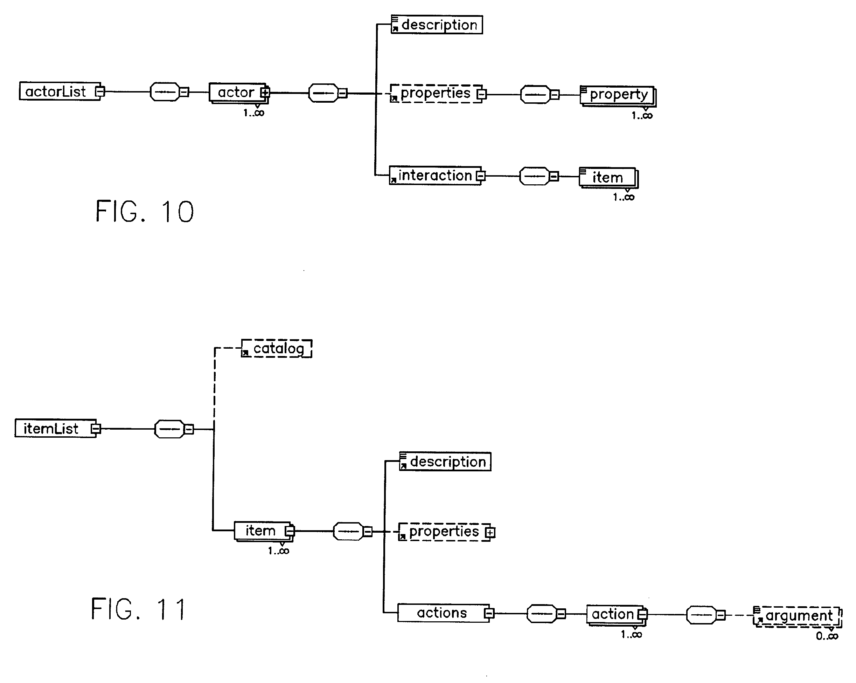

Actor namespaces are defined through <actorList> element, as showed in fig.10, with a namespace attribute containing the namespace name, and contain the detailed definition of a set of related actors belonging to the same application domain identified by the namespace.

Each actor is defined by a distinct <actor> element. This element has a name attribute and two other attributes specifying the unique identifier (id) of the actor and may have different specializations.

In this case, two optional base and specializations attributes are used to provide the information about the actor hierarchy.

In the following we give a brief overview of the <actor> element components:
- the <description> element contains a textual description of the actor;
- a <interactions> element containing zero or more <item> elements, refer to the items that can be used by the actor to interact with the system;
- a <properties> element that contains a set of <property> element each of them defined through its name, type and unique id attributes.
   Item namespaces begin with the <itemList> element, as showed in fig.11, with a namespace attribute containing the namespace name, and the detailed definition of a set of related items belonging to the same application domain identified by the namespace. Items are the objects used by actors to interact with the system. Again, the <itemList> element can be used to reference an item namespace within a scenario. When this happens, the element must be empty and it contains a src attribute with the namespace URI.
   Each item is defined by a distinct <item> element. This element has a name attribute and an id attribute specifying the unique identifier of the item. The <item> element contains a <description> element with a textual description of the item and one or more <action> elements, included in the <interactions> container, listing all the possible actions applicable to the item. Each <action> has a name and an unique id attribute, and can contain zero or more <argument> elements specifying the action parameters. Moreover, an item can have a list of <properties>. Each included <property> is defined through its name, type and unique id attribute.
   In the scenario model schema the element scenario has an id attribute specifying the unique identifier of the scenario
   In the following we give a brief description of the components of the <scenario> element.
- The <goal> element, corresponding to the result expected from the execution of the scenario and described textually.
- A <description > element, containing a textual scenario description.
- A <primaryActor> element, referencing the primary actor of the scenario.
- One or more <secondaryActor> elements, referencing the other actors involved in the execution of scenario.
- The <trigger> element, describing the event that causes the execution of the scenario, structured as a set of interactions linked boolean operator
- The <precondition> expressing what the scenario expects to be true when it begins, structured as a set of interactions linked boolean operator.
- The <postcondition> expressing what the scenario guarantees to be true when it concludes (if its recondition was met), structured as a set of interactions linked boolean operator.
- The <datainput> expressing the input data necessary for the execution of scenario.
- The <dataoutput> expressing the output data generated from the execution of scenario.
- The <attributes> element, containing a set of attributes that characterizes a scenario and contains the following types of elements: <author>, <creationDate>, <priority>, <revision>, <status>, <preTraceability> listing the user requirements satisfied by the scenario.
- The <simple > element contains a <mainflow> element denoting the main control flow of the scenario that satisfies the primary actor's goal.
- The <composite> element used to model the collaboration between scenarios.

With reference to fig. 9, simple scenarios describe the main control flow of interactions using a <mainflow> element, which contains a sequence of <step> elements, terminated by a <success> element specifying that the scenario <goal> has been satisfied.

Each <step> has a number attribute specifying its position in the control flow and it contains one of the <interaction>, <include> or <extend> elements referring to simple interactions, extensions and inclusions, respectively. Moreover, each step can contain zero or more <variant> elements denoting alternatives or exceptional control flows.

In the following we give a brief description of the components of the <step> element:
the <interaction> elements that it describes a single interaction, which has a formal structure in terms of a sequence of subject-predicate-object and describe the communication between the user and the system. The <interaction> element has the following contents:
- an <actor> reference, which is the subject of the interaction;
- a reference to the <action> taken by the actor in this step. The <action> elements may denote parametric actions by nesting a set of <argument> elements that specifies the action arguments;
- an optional <item> or <actor> reference that corresponds to the object of the interaction. As described in above sections, actors and items can have properties. To reference such a property within an interaction, the user can specify the corresponding <property> element inside the <item> or <actor> element.
- the <include> element, enabling the inclusion of the main control flow of a different scenario in the current point of the execution;
- the <extend> element, referencing the main control flow of a different scenario whose interactions may be optionally executed from the current step;
   the <variant> element denoting alternatives or exceptional control flows. A variant is activated only if a particular condition holds

The variant can be alternative variant or exception variant. Alternative variant contains an alternative control flow for a group of interaction of main flows. Exception variant introduce a flow of interaction that treats the exceptions. In the former case alternative variant is contained into an <alternative> element, while in the latter case, the exception variant is contained into an <exception> element.

Variants introduce their control flows starting from a particular <condition> step of mainflow or variant. A variant is activated only if its condition holds. A <variant> describes its control flow through a sequence of <step> elements that ends with a <failure>, <goto> or <success> elements.

At the end of the sequence of steps of <alternative> element, the <success> or <goto> element specifies that the control flow encapsulated in the <alternative> element satisfied scenario's goal. In particular the <goto> element indicates that the current flow of interactions continues from a particular step of another control flow (referenced by the ref attribute) of the same scenario.

At the end of the sequence of steps of <exception> element, the <failure> element denotes that the control flow encapsulated in the <exception> element does not satisfied scenario's goal.

The <composite> element showed in fig.9 is used to to compose a set of scenario and can be described as follows:

The content of <composite> element is each valid composition of the <scenario> element, used to reference a scenario involved in the composition, with relation containing in the <sequence>, <repeat>, <choice>, <parallel>, <join>, <extend> elements described as below. Note that each of these elements can contain in turn other scenarios, thus producing nested levels of composition:
- <sequence>element denotes a sequential composition. This element has two or more children that are executed sequentially in the given order,
- <repeat> element denotes a scenario repetition. This element has a single child whose execution is repeated for a fixed number of times or forever, as appropriately specified through the <condition> element;
- <choice> element denotes a mutually exclusive parallel composition. In this case, only one of the children it can have is executed;
- <parallel> element denotes a parallel composition. This element has two or more children that are executed in parallel;
- <join> element denotes a sequence between parallel composition and another scenario;
   <extend> element enables the execution of an optional scenario.

### GRAFICAL REPRESENTATION OF SCENARIO MODEL

According to a feature of the present application, the use of XML to formalize scenario model allows to apply the XSLT transformation in order to generate an effective visualization for the scenario model. The use of Javascript, CSS and DHTML gives a graphical notation that focuses on the structure of the scenario model.

The visualization may include the entire model, perhaps using a different notation (e.g., symbolic, tabular or graphical), or information may be elided. In this case, it may still be useful to retain some of the omitted information as context denoting it somehow as background rather than foreground. We use different graphical notations to represent elements with different semantics. All the elements of the scenario model can be showed with three different granularity levels. Some information may be elided to focus the view only on the details useful for a particular development phase.

Thanks to this visualization, it is possible to dynamically navigate through the scenario model, following the scenario interaction flow. allowing to see the scenarios at different granularity levels, and dynamically hiding parts of the specification that are not of immediate interest.

The visualization style provides:
- an advanced hypertextual view on scenarios and interactions;
- an incremental visualization of refined scenarios with different detail levels, where included scenarios and their refinement can be expanded inline;
- an online glossary for elements used in scenarios such as actor, action, item, namespace
   an intuitive graphical representation for composite scenarios and scenarios hierarchies.
   it is possible to check the consistency between all the objects of the model and to allow the visualization of scenario model at different levels of abstraction.

In order to exemplify the syntax and semantic of the scenario model and its visualization style, in the following description we suppose to have a set of XML documents that formalize the scenario model according to the scenario model schema, as defined in the present application.

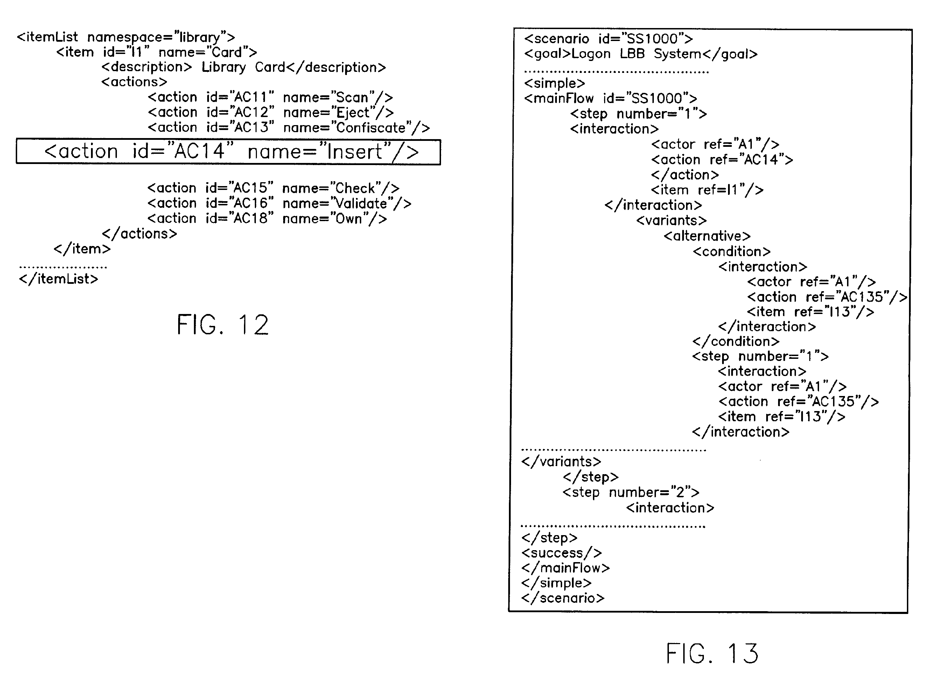

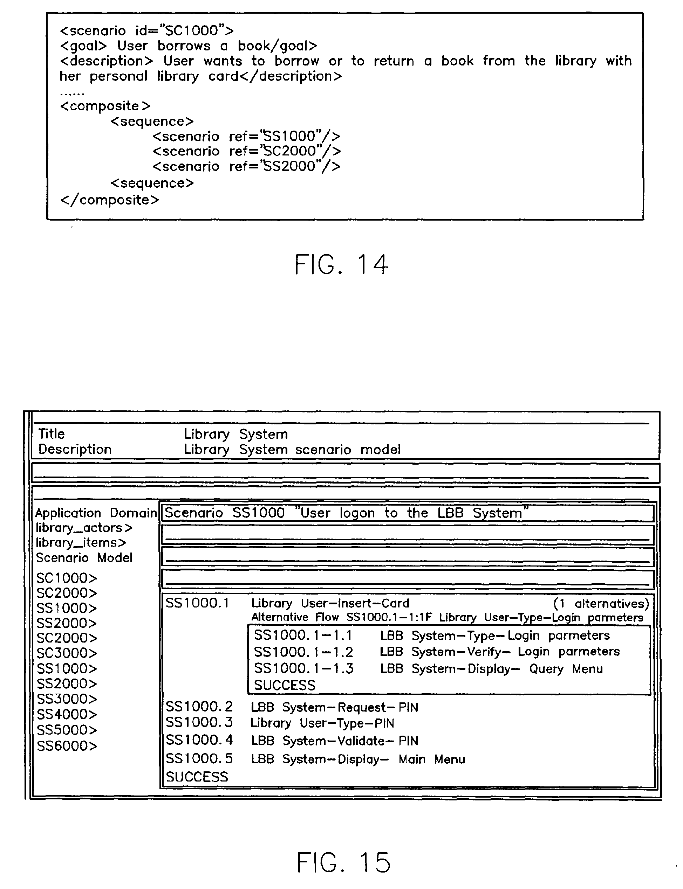

In the figures 12, 13 and 14, we illustrate some significant fragments of the XML scenario model documents. In particular the fig. 12 is a part of the vocabulary of a specific domaine, the fig.13 shows the scenario with its refinement, while fig.14 shows the fragment of XML document for a composite scenario, where both sequence and repeat composition primitive are used.
Fig.15 visualizes the scenario model and one of its simple scenario, the same of fig. 13.

The visualization of simple scenario is composed of four parts, showing respectively:
- a general information about the scenario, like title, author, preconditions, etc;
- the namespaces for actors and items used in the scenario, and the scenarios referenced by the current scenario;
- an optional third part, present only when there is a specialization hierarchy for scenario;
- a fourth part shows the scenario interaction flow. This flow is decomposed as a sequence of steps, each one numbered and associated with one of the following annotations:

- if the step contains an interaction, the annotation is a structured textual explanation of that interaction. Again, each term used in the description can be expanded by clicking on it.
- If the step contains an extend or an include, the annotation is the corresponding keyword followed by the identifier and the name of the referenced scenario, which can be expanded inline by clicking on its identifier.
- If the step contains one or more variants, then the step annotation also contains an indication of the number of alternatives/exceptions related to the step. By clicking on such indications, the analyst can expand the list of variants to show the corresponding the activation condition. Finally, each variant identifier can be clicked in order to display the corresponding flow of interactions.

The last line in the representation of scenario interaction flow is always one of the keywords SUCCESS, FAILURE, or GOTO. In the last case, the click on the goto step number allows to jump to the referenced step

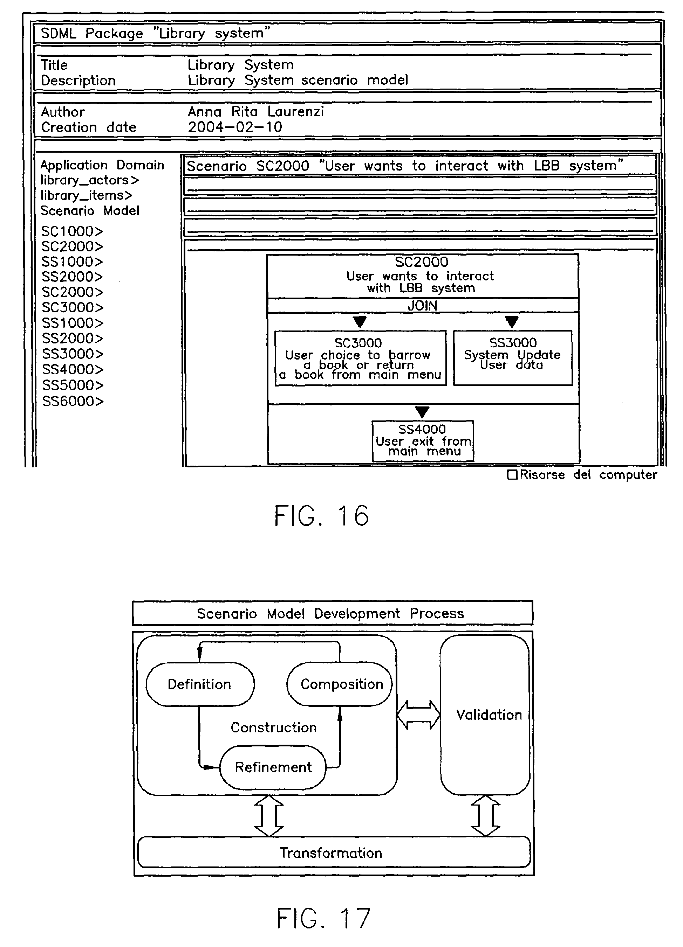

In Fig. 16 scenario model and one of its composite scenario are visualized.
The composite scenario is visualized as a diagram, where each composite scenario is represented by a box labeled with its identifier. There are two kind of boxes:
- Boxes with solid outline represent simple scenario. It is possible to explore the internal structure of these scenarios by clicking on their identifiers, obtaining mainflow scenario and its refinement.
- Boxes with dashed outline represent composite scenario. In this case, a click on the identifier expands the components obtaining the simple or composite scenario.

Moreover, whenever a scenario or its refinement includes other scenarios the latter are depicted within the former scenario box. Successive steps of the scenario sequential flow are separated by arrows. Scenarios that must be executed in parallel are visualized on the same row. Depending on the type of parallel composition used, the label parallel or choice appears over the row. Repeated scenarios are instead visualized inside a dashed box having the label repeat. To conclude, it is worth noting that this kind of visualization can also be used for debugging purposes. For example, when an interaction references an undefined actor, this error is reported by an appropriate error message appearing in place of the actor name.

### METHOD

This method comes from the idea to support the role that a scenario is aiming to play in the requirements engineering process and in system development. In our approach scenarios are used to formalize and reuse software requirements. This process is iterative and incremental supporting scenario evolution during the requirements engineering process..
The aim of the present method, is to capture and integrate some existing scenario-based requirements engineering approaches in order to describe and formalize the software specifications and reuse them in other phases of the software development process.
The method consists of a construction phase, in which scenarios are modelled and integrated in a unique scenario model, a transformation phase, in which scenario can be seen from different point of view, and a validation phase that, using the artifacts produced in the transformation phase, allows to validate and reuse scenario model respect the complitness of the scenario elements created in the construction phase

Fig.17 shows the set of phases that enable to construct and reuse scenario model.

In the following we briefly describes the set of phases showed in fig.17:
- the aim of construction phase is to construct a Scenario Model i.e. a set of scenarios that covers the overall user requirements, through an iterative and incremental process. To achieve this aim we use the definition of a structure to represent the semantic of scenario model and its formalization through a formal language, such as XML., describes before and object of this invention. Moreover it is important to describe the set of the activities to support this phase,
- the aim of transformation phase is "double": to satisfy the necessity to provide different representation of the same information to use in the validation phase and to derive other model to support the reuse of software requirements in the other phase of software development process. In this phase two model will be illustrated: test model and behavior model. A path generation algorithm is defined in order to generate in a automatic way the two model, starting from scenario model obtained in the construction phase. The consistency between model is assured by transformation rules defined in this phase,
- the aim of validation phase is to verify scenario model respect completeness, correctness and consistency of scenario elements created in the construction phase.

### CONSTRUCTION PHASE

This construction phase comprises the following phases:
- The definition phase aims to provide the structure and activities to elicit, specify and formalize the user-system interaction without considering its refinements. The activities performed in this phase can be summarizeas follows:
   - The creation of the list of actors interacting with the system.
   - The creation of the list of items used to interact with the system:
   - The identification of secario's goal.
   - The description of a scenario for each gola identified.
- In the refinement phase, an extension of scenario structure and a set of activities are provided in order to specify the overall functionality of the system including alternatives and exceptional flow in a scenario. Moreover scenarios are restructured to make them easy to understand and more reusable. This phase could be also skipped or applied after the composition phase.The main tasks accomplished during this phase are the following
   - The identification of redundant flows
   - The identification of extensional flows:
   - The identification of exceptions/gola obstacles.
   - The identification of alternatives flows.
- The aim of the scenario composition phase is to integrate different scenarios in order to show the dependencies and interactions among the functionality of the entire system. In this process the composition is accomplished directly at the scenario level. The main activities is to identify relation between scenarios in order to model features of the system that could not be captured when using a single scenario to describe it.

This construction process offers a different granularity level over the specification, which is helpful to reuse in other phases of the software development process. The notion of granularity helps us to control the process of construction scenario model and the reuse it in the other phases of development. In our approach we support different type of granularity. We explain what granularity means for us in our structure:
- first level: in this case the granularity of the Scenario Model is represented by "composite scenario", obtained by composing scenario through composition rules,
- second level: granularity of the Scenario Model is represented by the "scenario" that encapsulates only main flow of interaction,
- third level: granularity of the Scenario Model is represented by the "scenario" that encapsulates main flow of interaction and its refinement.

The (top down) scenario evolution is supported by the construction phase and guided by the scenario schema that allows constructing and representing scenario model at different levels of granularity: first the analyst can create and compose scenarios without specifying their internal details, but only the basic information such as the trigger, primary actor and goal. Then, these scenarios can be detailed formalizing the interaction flow that satisfies the corresponding goal. The refinement phase allows extending the basic knowledge expressed in the scenarios by introducing all the possible variants that argument the interaction flow. Finally, the composition phase allows to identity the relations among scenarios in order to cover all the functional requirements.

### TRANSFORMATION PHASE

The aim of transformation phase is double: to support the scenario model generation, avoiding incompleteness, inconsistency or incorrectness and derived other forms of specifications, e.g. test cases and state diagrams, from scenario model.

To achieve this aim, we need first of all to define an algorithm that generates all the flow of interactions included in a scenario, regarding both "branched" flows in the variants and flows produced from composite scenarios. Then, following the idea of several approaches presented in literature, in which information included in scenarios are reported both in test cases and in state diagrams, we define a set of rules that allows to derive test cases and state diagrams from the paths of scenario.

In our transformation process, no intermediate formalism is needed, since our scenario model schema allow to directly translate a scenario into target formats like, for example, state diagrams or test cases, assuring consistency and correctness between models.

The transformation rules are defined using the XML schema to represent both test case, more in general test model, and state diagram, more in general behavior model. In which test cases are defined as interaction flows between the system and the users for the specified system, where user interactions are mapped as *"action* to *be performed"* while system interactions are mapped as *"excepted result";* state diagram is defined as a set of interaction flows between the system and the users, in which interactions are showed with respect to the system-centered view.

From the scenario construction point of view, both test cases and state diagrams, generated in our approach, help the scenario model construction: test cases help to see the entire flow of interaction in a natural-language view, without introducing another formalism to see paths included in the scenario composition, or paths obtained from the refinement phase, while state diagrams help to reduce inconsistency and incompleteness in the scenario model, such as to identify user interactions that lack in the scenario.

Respect the reuse of software specification, in particular scenario model, we believe that our approach avoid the problem of inconsistency between software specification and system test, providing a semantic relation-ships between the two models. Indeed, to check that a given model is correct with respet to another model, we must first establish semantic relationships between elements of the two models. Such relationships may be established providing a set of transition rules to move from one model to another. These rules specify how the information contained in one model can be used for the definition of the other one. Test cases generated by our approach can be easily imported in a suite that supports the automation of test, as showed in the case study.

### PATH GENERATION ALGORITHM

As said before, the transformation phase comprises an algoritm based on the notion of path, as a sequence of all the possible interactions included in the scenario model formalized through the XML schema object of this invention.

The need to define an algorithm to generate all the possible paths in the scenario model, comes from the necessity to reuse the same path to generate both the test model and the behavior model. Test Model is defined as a set of interaction flows between the system and the users for the specified system, while behavior model is defined as a set of interaction flows between the system and the users extended with internal system interaction for the specified system.

First of all we define the notion of path used in this thesis.

### Definition

"A path is defined as an interaction flow between the system and the user, and it corresponds to a flow of actions obtained by analyzing all the flows of interaction derived from that scenario (simple or composite)".

In the following we illustrate the rules applied to the scenario model according to the invention, in order to obtain all the possible paths:
- it must exists a path for a mainflow of each simple scenario
- for each mainflow exist zero or more paths related to each variant. When a mainflow is visited, all possible paths related to variants are written separately. Note that if a variant is an alternative, then the path will end with success, while if the variant is an exception, the path will end with failure and it does not continue.
- if a flow of interactions contains extend or include scenarios, then the path generation algorithm will explore this interaction flow as it was in line expanded.
- if S is a composite scenario, then the path generation algorithm, will applied to each mainflow obtained by applying the composition rules defined in the previous section. The resulting set of paths is the union of all the sets of path related to each mainflow.

The path generation algorithm we have developed generates all the paths derived from an interaction flow .
Let S be a scenario then
**Path (S)= ∪ path_step(step) for each step in S**
where path_step(step) is a recursive function that constructs the path.
Let prolog be a set of interactions, while mainsubflows and subflows are subpaths of scenario.
Let variants(step) be a set containing the first step of each variant starting from the given step.
path_step(step)

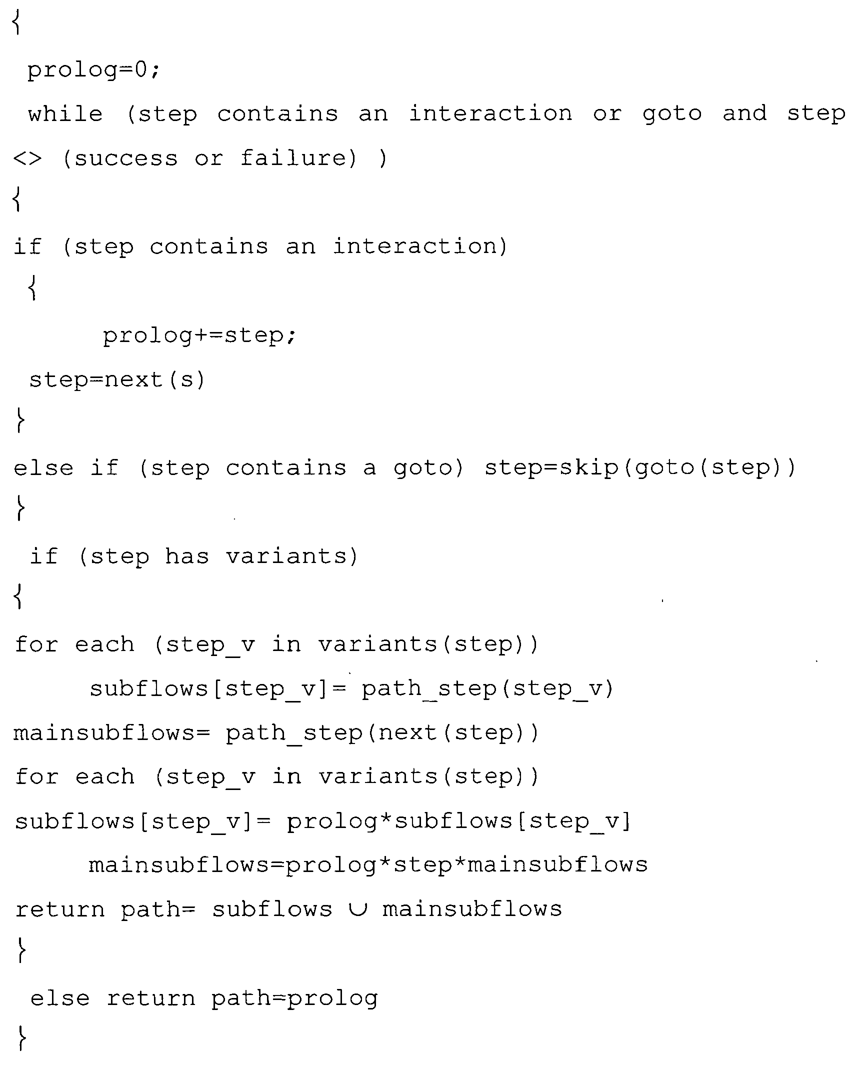

If the scenario contains only a mainflow, then the path will be exactly a set of steps defined as prolog, otherwise the path will be obtained combining the achieved subpaths: prolog , subflows, mainsubflows.

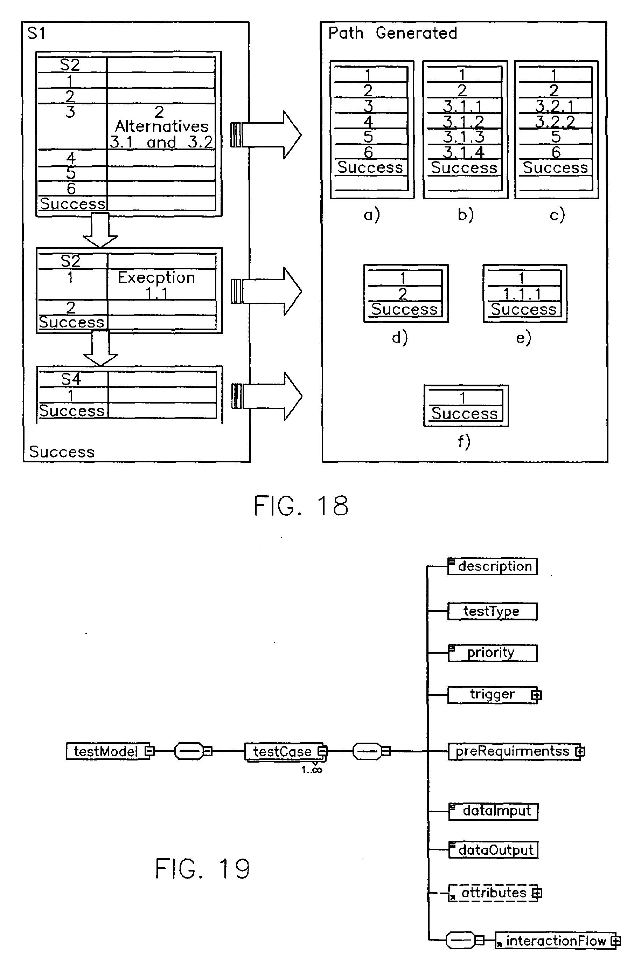

With reference to fig. 18, we explain the algorithm using the following example:
- Let S1, S2, S3, S4 be a simple scenario such that mainflow S1 contains some step that enable inclusion of other scenario (S2, S3, S4). S2 has a mainflow with two alternatives, S3 has a mainflow with one exception and S4 has only a mainflow.
- Let S be a composite scenario while S1 and S5 are simple scenarios, such that S= sequence (S1, S5), where S5 has a mainflow and one alternative.

In the first example, applying the path generation algorithm to S1, we obtain the following path:
- a)-d)-f)
- a)-e)
- b-d)-f)
- b-e)
- c)-d)-f)
- c)-e)
where paths a), b) ,c), d), e), f) are generated respectively from the single scenarios S2,S3,S4, and then combined in order to obtain the entire set of path.

For the second example mainflow(S)= mainflow (S1) ∪ mainflow(S5), where
path (S1) is
- a)-d)-f)
- a)-e)
- b-d)-f)
- b-e)
- c)-d)-f)
- c)-e)
while path(S5) is
- h)
- g)
where h) is the path related to mainflow of S5, while g) is the path related to alternative of S5.

The path(S) is obtained combining the path(S1) and path(S5) as follow:
- a)-d)-f)-h)
- a)-d)-f)-g)
- a)-e)
- b-d)-f)-h)
- b-d)-f)-g)
- b-e)
- c)-d)-f)-h)
- c)-d)-f)-g)
- c)-e)

### GENERATION OF TEST MODEL

According to another aim of the invention , we provide a set of test cases, included in a test model, at the procedure level (such as a sequence of steps that simulate user events and system response) as a baseline to validate system function developed.

The benefits of this solution can be summarized as follows:
1) improve the construction of scenario model thanks to others views of the user system interaction.
2) Test cases procedure, can be imported into a tool that support the function test development i.e. tool mercury.
3) the test model can be regenewreted automatically when the scenario model is modified.

The focus of this section is on the methods to generate testcases for system test, starting from Scenario Model. There are several reasons to reuse software specification in testing, the most important is the opportunity of minimizing modeling effort by utilizing the same information for several purposes improving traceability from software requirements, through design, to test . Also reusing software specifications in order to facilitate the tester designer/analyst to cover all requirement specifications in test phase, without adding a new cost and time pressure.

Before showing the formal procedure to transform a scenario model into test artifacts, we give some basic definition.

### Definition

*Testcase at* the *system level is defined as an interactions flow between system and users. In other words we can define test case as an ordered set of interactions that happen under certain conditions (precondition) and a set of data inputs, to achieve* the *primary actor's goal by performing flow of interactions and having a particular result with reference to that goal (postcondition)*.

### DEFINITION

"A test model consists of a set of test cases for the specified system, each one containing a sequence of actions that must be performed during the testing session, followed by the expected system response."

The test model generation procedure that we developed, is based on the definition of the new schema to formalize the structure of test model through XML-technologies, and then on the application of a path generation algorithm to the scenario model in order to generate all possible flows of interaction for testcases. Note that if scenario model is reviewed, also test model or particular test cases can be reviewed.

To each scenario, correspond one or more testcases, one for the path obtained from the mainflow and one testcase for each path generated that ends with success. All test cases related to a scenario are grouped together with a link to the parent.

To formalize a Test Model and testcases, we defined an XML language through an XML Schema definition. The language defined by this schema is called TDML (Test Description Markup Language). TDML documents have the XML standard tree structure and contain a section describing the entity testcase. The following figures present the syntax and the semantic schema used to define each test case. The semantic view of test cases can be deduced from their syntax schema, without introducing a new notation diagram.

The overall organization of a TDML document is shown in the follow figure. A TDML document begins with the < TestModel > element and contains one or more <testcase> elements.

Fig.19 visualizes the schema of a TDML document, in which each testcase is enclosed in the <testCase> element decomposed.. This element has an id attribute specifying the unique identifier of the testCase.

In the following, we give a brief description of the components of the <testcase> element.
- A <description > element, containing a textual description of a testcase
- A <testType > element, containing a type of testcase, in our case is only FT (functional test)
- The <priority> element, indicating the priority related to testcase
- The <trigger> element, describing the event that causes the execution of the testcase
- The < Pre-Requirements > element expressing what the testcase expects to be true when it begins, structured as a set of interactions
- The < Expected outputs > element expressing what the testcase guarantees to be true when it concludes (if its recondition was met), structured as a set of interactions
- The < dataInput > element expressing the input data necessary for the execution of testcase.
- The <dataoutput> element expressing the output data generated from the execution of testcase.
- The <attributes> element, containing a set of attributes characterizing a testcase and also the following types of elements: <author>, <creationDate>, <priority>, <revision>, <status>, <note>, <testTraceabilty> listing the software requirements satisfied by the testcase. These requirements, which are commonly described and classified in the Software Requirements Document are referenced in SDML through their unique ID.
- The <interactionFlow> element, denoting the interaction flow of the testcase representing the operations to be performed and corresponding to a path.

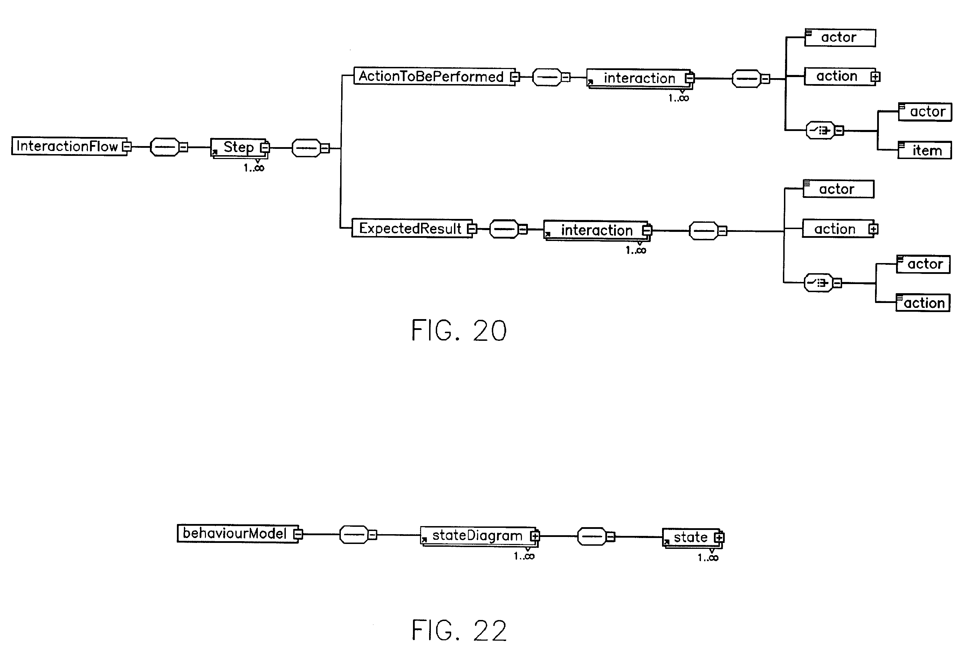

The <InteractionFlow> element, as showed in Fig.20, contains a sequence of <step> elements.
Each <step> element has a number attribute specifying its position in the interaction flow and contains <interaction> elements that describe a single interaction. The <interaction> element has the following content:
- an <actor> reference, which is the subject of the interaction;
- a reference to the <action> taken by the actor in this step. The <action> elements may denote parametric actions by nesting a set of <argument> elements specifying the action arguments;
- an optional <item> or <actor> reference that corresponds to the object of the interaction. As described in above sections, actors and items can have properties. To reference such a property within an interaction, the user can specify the corresponding <property> element inside the <item> or an <actor> element.

Each step is made up of *"Action* to be *performed"* such as the interaction which has the user as the primary actor, and *the "Expected result"* such as the interaction which has the system as primary actor.

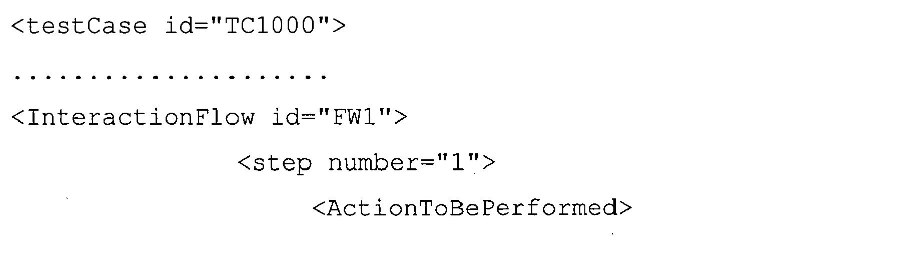

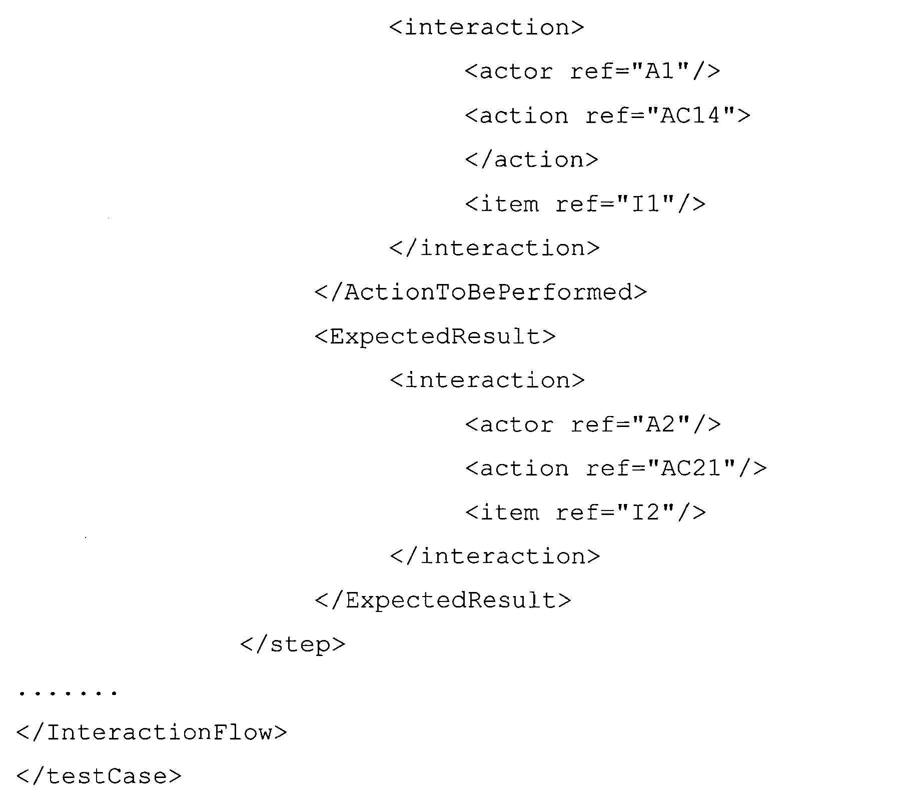

In the following, we show the procedure defined to obtain Test Model, formalized through TDML. We start from Scenario Model. After each modification of Scenario Model, the test Model and in particular test cases are regenerated if some path has been introduced or removed, otherwise the modification of item or actor requires only an update of the test model.

The test model consists of a set of testcases corresponding to the functionality of the system to be tested. Each test case corresponds to a particular path obtained by applying the path generation algorithm to the scenario model described in the previous section. The sets of testcases obtained from a particular scenario model, are grouped in a test model. Test Cases related to each scenario are hierarchically organized through relation between paths. We recall that path relation are derived from the relation between the mainflow and the refinement of the scenario.

Now we specify how the information contained in the scenario model are used for the definition of the test model. We describe the semantic relationship between elements of the scenario model and elements of the test model, by defining a set of transition rules. In this way it's possible to check if the test model is correct and consistent with respect to the scenario model and vice versa.

Each path is a set of steps containing a simple interaction user-system. The mapping algorithm takes a path and maps each interaction in which the user is the primary actor with the element <ActionTobePerformed> of the schema, while the interactions in which the system is the primary actor are mapped into the <ResulExcpected> element. If there are more subsequent interactions with the same primary actor, then the algorithm will groupe them in a unique element <ActionTobePerformed > or <ResulExcpected> .

Finally the basic information of each testcase can derive from the basic information of a simple scenario. For composite scenarios, basic information for testcases are obtained applying the composition rules. Let S be a scenario. The guidelines to map a scenario structure into a testcase structure are the following:
- mainflow and all the variant flows of a scenario are mapped into a single testcase using the path generation algorithm,
- description of test cases correspond to the goal and the description of scenarios;
- trigger of test cases is the trigger of scenario or is an activated condition for alternative;
- priority of test cases correspond to a priority of scenario;
- preconditions of scenario are mapped in test case as preRequirements;
- dataInput of testacase correspond to dataInput of scenario

The rules described before assure the consistency with respect to the semantic of the element between scenario model and test model. The consistency with respect to the composition of scenario is guaranteed by the composition rules defined for scenario model and the path generated.

All the element in the testcases that do not have a corresponding element in Scenario Model should be valorized by test designer.

Graphical notations are often used for presenting formal specifications, so when a new language is defined it is important to create an interactive technique that can help users to navigate and comprehend the specifications. The test cases obtained applying the previous algorithm, is visualized using XSLT technologies providing a graphical and hypertextual representation that helps the analyst or tester to navigate and comprehend the test cases and their relation with software requirements formalized as scenarios.

In particular, the visualization of test cases is reported in figure 21, which is composed of the following parts, showing respectively:
- a general information for a test case, like description, test Type, author, pre-requirements, etc. Also , the scenarios related to this test case;
- the namespaces for actors and items used in the testcase;
- the last part shows the interaction flow as a sequence of steps made up of *"Action to be performed"* as the interaction which has the user as the primary actor and the *"Expected result"* as the interaction which has the system as primary actor.

Note that, clicking on it can expand each term used in a testcase.

These test cases are related to the example before introduced.

### BEHAVIOR MODEL GENERATION

The aim of this section is to describe the process to derive a system behavior specification from scenario model defined in this invention.

In this thesis the terms "behavior model" and "dynamic model" are considered as synonymous. Following the object-oriented development, in which dynamic models are represented graphically with state diagrams, our approach is based on the formalism of state diagram to represent the dynamic of the system. We generate a set of component behaviors (i.e. state diagrams) starting from scenario model using the paths related to each scenario. In contrast with other known solution our state diagrams are generated from scenario model, respect the system-centered view, where user actions are modeled as transition events. This view helps designer to validate and refine internal system interaction enclosed in states of state diagrams.

This section describes both the XML schema defined for behavior model and the set of rules used to transform scenario in state diagram. In our context a behavior model is a collection of state diagrams that specifies the state sequence caused by an event (i.e. interaction) sequence and interacts with each other via shared events. Note that in this context event and interaction have the same meaning. A state diagram relates events and states. An event acts as a signal to the system: it is a one-way transmission of information either from the environment to the system or among objects of the system. A state specifies the response of the object to input events. A change of state caused by an event is called a transition. Formally speaking we say that: *state diagram is a graph whose nodes are states and whose directed arcs are transitions.*

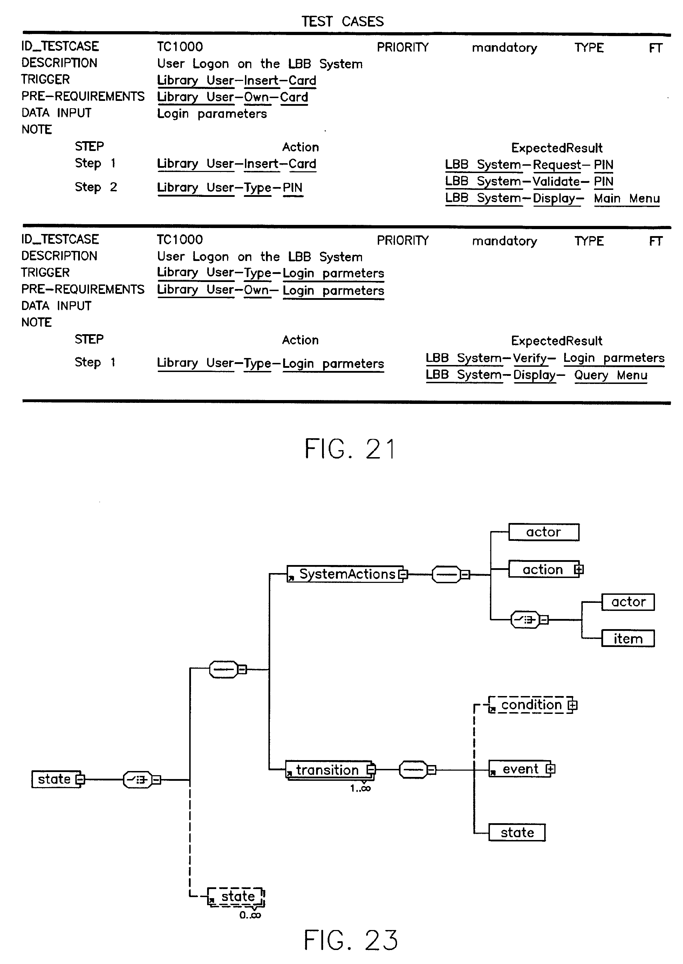

To formalize the Behavior Model, we defined an XML language through an XML Schema definition. The language defined by this schema is called SCDML (Behavior Description Markup Language). SCDML documents have the XML standard tree structure and contain a sections describing the entity state diagram. The figures 22 and 23 present the syntax and the semantic schema used to define each state diagram. The semantic view of statediagram is reported with the description of each element of the schema, without introducing a new notation diagram.

The overall organization of an SCDML document is shown in the follow figure.

A SCDML document begins with the <behaviourModel> element, and contains one or more statediagram, each one is enclosed in the <stateDiagram> element. Each <stateDiagram> element has an id attribute specifying the unique identifier of the state diagram and contains one or more <state> element as shown in the figure below.

When an object is in a state and an event labelling one of its transitions occurs, if the condition is true, the object executes the action associated to the transition enclosed in the <event> element and enters the state on the target end of the transition, denoted by <state> element. If more than one transition leaves a state, the first event to occurs will cause the corresponding transition to be fired. If an event occurs that has no transition leaving the current state, the event will be ignored.

In our schema, each state is defined by a distinct <state> element. This element has an id attribute specifying the unique identifier of the state in a behavior model and can contains zero or more <state> elements to support the macro-state , one or more <transition> elements and one ore more <systemActions> elements that represent the actions performed by the system. Each <transition> has a number attribute specifying its unique identifier in the state diagram and contains a <state> element that specifies the name of the state reached by the transition (referenced by the ref attribute) and <event> element that contains action associated to the transition.

The <event> having the following content:
- an <actor> reference, which is the subject of the event. In our context event has user as actor,
- a reference to the <action> taken by the actor in this event. The <action> elements may denote parametric actions by nesting a set of <argument> elements that specify the action arguments;
- an optional <item> or <actor> reference that corresponds to the object of the event. As described in above sections, actors and items can have properties. To reference such a property within an event, the user can specify the corresponding <property> element inside the <item> or <actor> element,
- an optional <condition> element used as guard on transitions. A conditional transition fires when its event occurs only if the guard condition is true;

The behavior model consists of a set of state diagram corresponding to the state sequence caused by an event (i.e. interaction) sequence and interacts with each other via shared events. Starting from a scenario model , it's possible derived one statediagram for each scenario composing scenario model. Also a designer can specialized a behavior model obtained by transformation rules apply to scenario model and adding the internal system interaction as actions of the state.

The procedure defined consists of the following activities:
- derive a state diagram for each path;
- compose state diagrams generated for each path related to a scenario in a unique state diagram. Before composition, some check of completeness of scenario model will be done. In particular using a checklist with some relevant questions, such as: are all the states connected in the statediagram? or Does the initial state contain preconditions?
- aggregate state linked with an empty transition: it consists in aggregating of each statediagram related to a scenario, the state that has empty transition.

In the first step of the procedure we generate a state diagram (consisting of state nodes and transition edges) for each path of scenario. Then we apply this derivation algorithm repeatedly for each scenario including in the scenario model takes as input, in order to obtain a statediagram for each path generated from scenario model.

In the second step, we aim to integrate the statediagram obtained from a set of path related to scenario, in a single state diagram. We define a procedure to compose state diagrams in order to have a behavior model for the entire system. We remind that path relation are derived from the relation between mainflow and refinement of scenario.

Now we specify how the information contained in the scenario model are used for the definition of behavior model. We describe the semantic relationship between element of scenario model and elements of behavior model, defining a set of transition rules. In this way it's possible to check if behavior model is correct and consistence with respect to scenario model and vice versa.

Let S be a scenario, then the guidelines to map scenario structure into statediagram. Structures are the follows:
- mainflow and all the variant flows of a scenario are mapped into a statediagram;
- a step containing an interaction, can be translated into a state or a transition in a state diagram. Interactions that have the user as the primary actor are mapped to state transitions encapsulated in <event> element, while interactions that have the system as the primary actor are mapped as actions performed by the system and encapsulated in <systemActions> element. The transitions to final state have the attributes name as "Empty";
- the triggering event is the state transition to the initial state. The initial state is represented with <state> element in which the attribute Name as "Start";
- preconditions are mapped in a state diagram as actions of the initial state and represent the environment requested from the scenario before to be executed;
- postconditions are represented in state diagram as actions of the final state. The final state is represented with <state> element in which the attribute Name as "Final";
- the condition in scenario, used to activate a variant, is mapped in a state diagram as condition.

The rules described before assure the consistency respect the semantic of element between scenario model and behavior model, while the consistency respect of the composition of scenario is guaranteed by the composition rules defined for scenario model and the path generated.

We used a software application not included in this invention to visualize the statediagram related to each scenario.

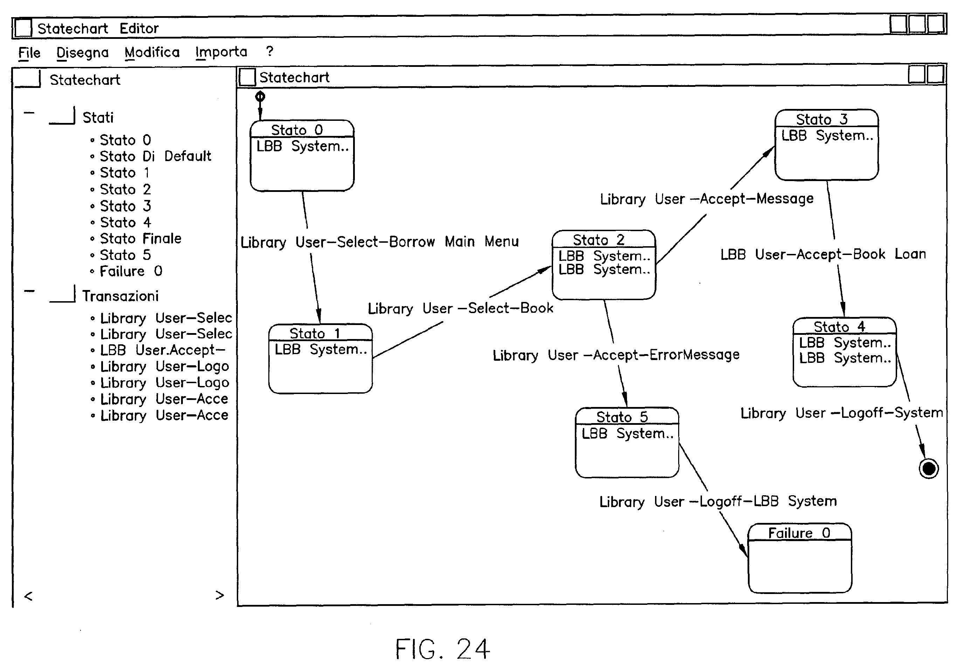

The visualization of statediagram, showed in fig. 24, is composed of a left pane that shows the XML tree-structure of the statediagram, in which state and transition are showed as child of the tree. In the right pane a graphical representation of the statediagram is given. In the diagram, each state is represented by a box labelled with its interaction, the initial and final state are showed using a different notation. Transition is showed as an arrow connected one state to another. The label over a transition corresponds to an interaction of a scenario in which user is the primary actor. Moreover, whenever a scenario or its refinement includes other scenarios the latter are depicted within the former statediagram form.

Hence the XML document related to state diagram must be adapted in order to be imported in the state diagram tool. In particular, the final transition has been added and labelled as the first transition of the possible scenario following the considered one.

### VALIDATION PHASE

- The aim of validation phase is to verify scenario model respect completeness, correctness and consistency of scenario elements created in the construction phase.

### Scenario model completeness

There are several ways to define the completeness of the scenario model .respect to the entire system behaviour. Formally speaking, we can say that completeness is defined as the capability of scenarios to model all the behaviors required by the user, and we consider the completeness of the scenario model respect to the following parameters:
- construction of the scenario model, with respect to the user point of view;
- total number of actors, actions, exceptions and alternatives in the scenario model;

Moreover, in our approach, the completeness properties can be directly verified in the scenario construction phase, thanks to the formal structure of the XML schema that formalizes scenario model. Other approaches, instead, need intermediate transformations to achieve the same results.

The construction activities phase described in the previous section, allows to construct the scenario model for the overall system behavior through an iterative and incremental approach, where the goal of the first two phases is to refine the specification in a top-down way, while in the last phase scenarios are composed in a bottom-up way. In particular, this approach is subdivided as follows.
- In the definition phase the scenario actors, items, goals and preconditions are defined to ensure a common understanding of the domain of each scenario.
- In the refinement phase, variant flows (alternative and exceptional flows), extension (extend) and shared (include) flows are individuated for each scenario.
- In the composition phase, the relations between simple scenarios are identified to describe the overall system behavior. Finally, the specification artifacts are organized in a hierarchical way within a structure called scenario model.

Also others rules can be applied to the scenario model in order to check the completeness of the scenario model elements. For example the total number of actors, actions, exceptions and alternatives for each scenario . To do this, we have developed an XSLT algorithm that applies some of the following metrics,
- number of steps scenario: in this case it is necessary that almost two steps are included in the mainflow of scenario;
- number of step in which user is the primary actor of the interaction;
- number of step in which system is the primary actor of the interaction;
- check on the number of the alternatives for each step;
- maximum deep of alternatives;
- check on the number of the exception for each step;
- maximum deep of exception;
- occurrence of items, actors, actions;
- check on the different type of step (interaction, include, extend);
- number of extend and include.

### Scenario model consistency

Scenario model consistency means the capability to avoid contradictions inside the scenario model and respect to its derived models. We consider two type of consistency,: *inter-model* (i.e., the checking of consistency inside scenarios and among them), and *intra-model* (i.e., the checking of consistency to verify that there are no contradictions between the scenario model and its derived models).

Inter-model consistency is applied both to simple scenarios and composite scenarios. In the first case, the checks accomplished are the following:
- all the items, actors, actions used in the definition of scenarios are referenced to items, actions, actors formalized in the application domain;
- alternatives or exceptions are tested to be consistent with the control flow.

As an example, let us use the following scenario to explain the last type of check. Let SS1000 be a scenario, whose mainflow is made up of the steps SS1000.1, SS1000.2, ..., SS1000.N, and let us suppose that an alternative flow identified by SS1000.1-1 may start from the step SS1000.1. In this case the alternative interaction flow is correct if and only if:
- in the control flow, the current step (SS1000.1) becomes the first step of the alternative flow (SS1000.1-1.1);
- the activation condition of the alternative flow and the current step preconditions match;
- the postconditions of the mainflow are satisfied by each variant flow.

Intra-model consistency holds thanks to the following features:
- the application domain between models is shared;
- the cross-referencing is obtained through XML;
- the minimization of the overlap between the scenario model and the behavior model;
- the minimization of the overlap between the scenario model and the test model.

The main idea underlying the intra-model consistency is that the various models generated share the same application domain. In this way, it is possible to check cross-referencing between models in a systematic way thanks to the high level of formalization provide by XML schema use to formalize scenario model.. Moreover, the algorithms used in the transformation phase accomplish many of these this checks automatically.

### Scenario model correctness

Scenario model correctness is the capability to avoid incorrecteness during flow of interactions composition.

During construction phase it is possible to use some elements of scenario model , like <preconditions>, <postconditions> and <condition>, in order to implement some correctness checks. For instance, we can verify if a flow is correctly included into another by checking its preconditions. Also thanks to the transformation rules, we can check the correctness deriving other models with a predefined semantic and syntax i.e.behaviour model highlighting some possible errors.

## Claims

1. A software development method **characterized in that**:
• it is based on a specific and precise semantic and syntax for scenario and scenario model formalized through an XML schema,
• it comprises a recursive algorithm to visit the scenario model,
• it comprises an integrated environment made up four different views; design view, presentation view, state diagram view, test cases view, and
• it comprises a set of five phases and activities that allow to construct and reuse scenario model during the entire software development process, that are definition, refinement, composition, transformation, validation.

2. A software development method according to claim 1 **characterized in that** scenario is defined as a set of elements comprising:
goal, description, primary actor, secondary actor, trigger, precondition, postcondition and is specialized in simple and composite where simple scenario is a scenario that contains a main flow.

3. A software development method according to preceding claims **characterized in that** main flow is composed by a sequence of steps that terminate with succes, where each step can be one of the following elements: interaction, include, extend, where include and extend allow to recall a scenario inside another scenario through the include and extend operator, respectively.

4. A software development method according to preceding claims **characterized in that** each step can be linked to one or more variants, said variants expressing the exception or alternative flows of interactions to the main flow.

5. A software development method according to preceding claims **characterized in that** the exception is activated by one or more condition, is composed by a set of steps, and it terminate with a failure element.

6. A software development method according to preceding claims **characterized in that** the alternative is activated by one or more condition, is composed by a set of steps, and it terminate with success element or goto element.

7. A software development method according to claim 3 **characterized in that** the interaction is composed of an actor, an action that can be follow by an item or an actor, where each elements is specified in a vocabulary that define the application domaine.

8. A software development method according to preceding claim **characterized in that** the vocabulary comprises an actor list and an item list where actor list is a set of actor elements defined through description and property and can include a list of item and item list is a set of item elements defined by description and a set of action, each one **characterized by** an action identifier and arguments.

9. A software development method according to claims 2 and 7 **characterized in that** the trigger, preconditions and postconditions are structured as a set of interactions linked through boolean operators.

10. A software development method according to claim 2 **characterized in that** each composite scenario is a scenario that contains a set of scenarios related to six operators (sequence, repeat, choice, parallel, join, extend).

11. A software development method according to claim 10 **characterized in that** the sequence operator is defined as follows:
for given S1 and S2 scenarios,
where precondition(S2) = postcondition(S1) and primaryActor(S1) = primaryActor(S2), then S = **Sequence** (S1, S2) is a scenario such that:
- goal(S)= goal (S2) and goal(S1)
- primaryActor(S)=primaryActor(S1)
- trigger(S)=trigger(S1)
- precondition(S)=precondition(S1)
- postcondition(S)=postcondition(S2)
- flows of interactions (S) are obtained combining the flows of interactions(S1) and flows of interactions(S2)

12. A software development method according to claim 10 **characterized in that Repeat** (S1, N)= S is a scenario that repeats scenario S1 n times, where S is such that:
- goal(S)= goal(S1)
- primaryActor(S)=primaryActor(S1)
- trigger(S)=trigger(S1)
- precondition(S)=precondition(S1)
- postcondition(S)=postcondition(S1)
- flows of interactions (S) are obtained adding a condition at the end of mainflow(S1) in order to repeat flows of interactions(S1) until condition is satisfied.

13. A software development method according to claim 10 **characterized in that choice** (S1,S2)= S is a scenario such that S=S1 or S=S2

14. A software development method according to claim 10 **characterized in that Parallel** (S1,S2)= S is a scenario such that flow of interactions(S) are obtained through parallel execution of the flows of interactions(S1) and flows of interactions(S2).

15. A software development method according to claim 10 **characterized in that** if primaryActor(S1)=primaryActor(S2) and S1= parallel(S1.1, S1.2), then S=**Join** (S1,S2), such that:
- goal(S)= goal(S2) and goal(S1)
- primaryActor(S)=primaryActor(S1)
- trigger(S)=trigger(S1)
- precondition (S2) c postcondition(S1.1) and postcondition(S1.2)
- precondition(S) = precondition(S1)
- postcondition(S) = postcondition(S2)
- flows of interactions(S) are obtained through parallel execution of the flows of interactions(S1.1) extended with flows of interactions (S2) and flow of interactions (S1.2) extended with flows of interactions (S2)

16. A software development method according to claim 10 **characterized in that Extend** (S1,S2)=S is a scenario in which S2 may extend S1, such that:
- goal(S)= goal(S1)
- primaryActor(S)=primaryActor(S1)
- trigger(S)=trigger(S1)
- precondition (S1) c precondition(S)
- postcondition(S) ⊃ postcondition(S1) and postcondition(S2)
- flows of interactions (S) are obtained extending the flows of interactions (S1) with the flows of interactions (S2)

17. A software development method according to preceding claims **characterized in that** scenario model is a set of scenarios both simple and composite referred to one or more vocabulary, and allows to give a precise semantic to each object referred in the scenario model and to share the domain knowledge between different scenarios.

18. A software development method according to claim 1 **characterized in that** in order to visit the scenario model it is used a path generation algorithm wherein path is defined as a flow of interactions between the system and the user and it corresponds to a flow of actions obtained by analyzing all the flows of interactions derived from that scenario, said algorithm being able to generate all the possible interaction flow in order to derive from the scenario model other models such as test models and behaviour model, using a set of transformation rules.

19. A software development method according to the preceding claim **characterized in that** the path generation algorithm or **Path** is:
**Path (S)= ∪ path_step(step) for each step in S**
where S is a scenario and path_step(step) is a recursive function that constructs the path defined as follows:
path_step(step) 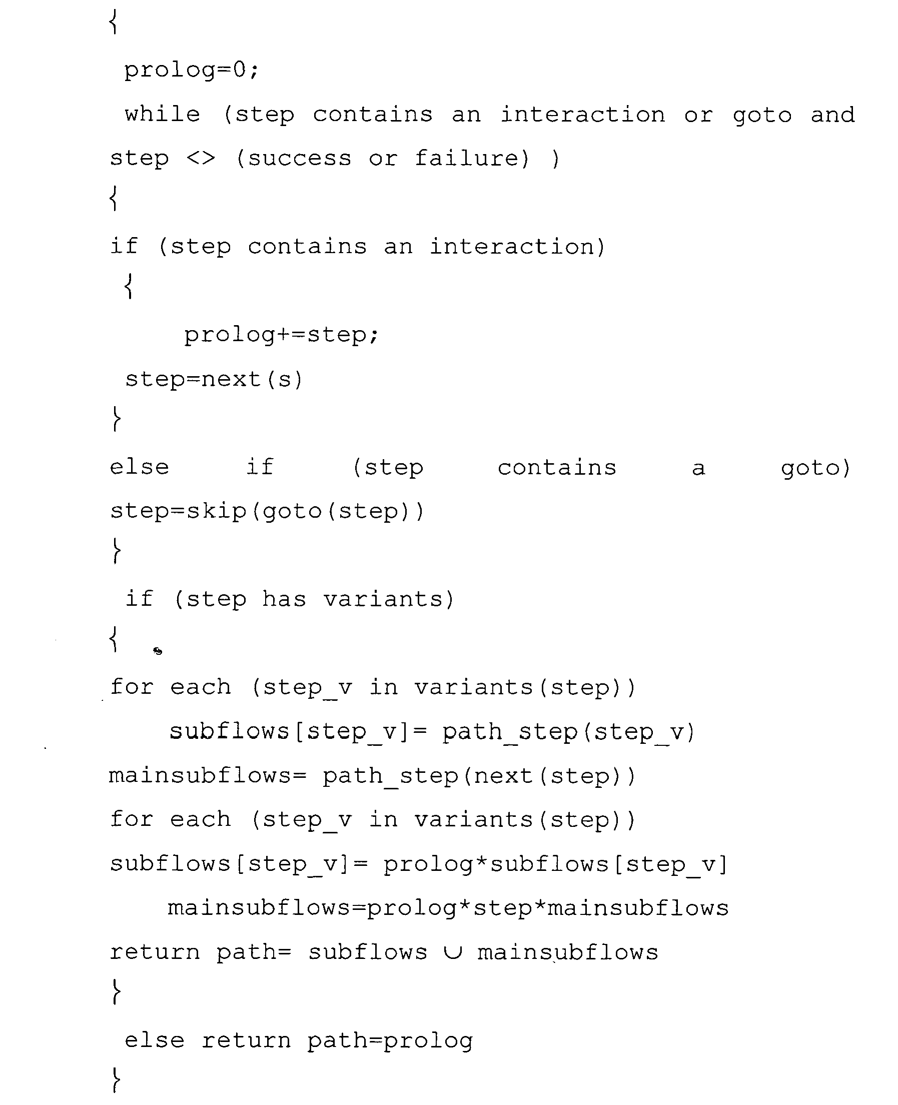 where prolog is a set of interactions, while mainsubflows and subflows are subpath of scenario , and variants (step) is a set containing the first steep of each variant starting from the given step.

20. A software development method according to claim 1 **characterized in that** the integrated environment made up of four different views which are:
a) a design view that allows to create a new document XML according to the scenario model formalized through XML schema, using a set of wizard-like dialogs that can be used to fill and modify the XML document;
b) a presentation view based on graphical and hypertextual representation for scenario model, that allows the analyst to explain and validate software requirements with non-computer experts and at the same time allows to show the scenario composition in a diagrammatic view that helps to better understand the overall functionality of the system,
c) a state diagram view, that visualizes the flow of interaction from a system-centered view, enabling the revision of the scenario model artifacts, identifying inconsistencies and lacks of information in the scenario model,
d) a test case view representation, which is a textual representation that allows to follow the entire flow of interaction generated during the scenario composition, using test cases.

21. A software development method according to claim 20 **characterized in that** the presentation view is obtained applying the XSLT transformation to the XML scenario model.

22. A software development method according to claim 21 **characterized in that** the visualization of simple scenario is composed of four parts, showing respectively:
- a general information about the scenario, like title, author, preconditions, etc;
- the namespaces for actors and items used in the scenario, and the scenarios referenced by the current scenario;
- an optional third part, present only when there is a specialization hierarchy for scenario;
- a fourth part shows the scenario interaction flow.

23. A software development method according to claim 22 **characterized in that** this flow is decomposed as a sequence of steps, each one numbered and associated with one of the following annotations:
- if the step contains an interaction, the annotation is a structured textual explanation of that interaction. Again, each term used in the description can be expanded by clicking on it;
- if the step contains an extend or an include, the annotation is the corresponding keyword followed by the identifier and the name of the referenced scenario, which can be expanded inline by clicking on its identifier;
- if the step contains one or more variants, then the step annotation also contains an indication of the number of alternatives/exceptions related to the step, and by clicking on such indications, the analyst can expand the list of variants to show the corresponding the activation condition.

24. A software development method according to claim 23 **characterized in that** each variant identifier can be clicked in order to display the corresponding flow of interactions.

25. A software development method according to claim 21 **characterized in that** the composite scenario is visualized as a diagram, where each composite scenario is represented by a box labeled with its identifier,
where the type of box depends by the type of the composite operators.

26. A software development method according to claim 21 **characterized in that** the presentation views is used for the debugging purposes in order to discover undefined elements.

27. A software development method according to claim 20 **characterized in that** test cases are defined as a set of elements comprising:
description, test type, priority, trigger, prerequirements, expected output, data input, data outpout, a set of attributes, interaction flowes.

28. A software development method according to claim 27 **characterized in that** the interactions flow is composed by a sequence of steps, where each step has an unique identifier and is made up of "Action to be performed" and the "*Expected result".*

29. A software development method according to claim 28 **characterized in that** " Action to be performed" and "*Expected result"* elements contain the interaction elements, where the former contains the interaction which has the user as the primary actor while the latter contains the interaction which has the system as primary actor.

30. A software development method according to claim 29 **characterized in that** test cases interaction elements have the same structure of the scenario model interaction.

31. A software development method according to claim 27 **characterized in that** test model element contains one or more test cases.

32. A software development method according to claim from 27 to 31 **characterized in that** the test model and its elements are formalized trough an XML schema called Test Description Markup Language.

33. A software development method according to claim 32 **characterized in that** each test case corresponds to the path obtained by applying the path generation algorithm to the scenario according to claims 18 and 19 and defining a set of transition rules.

34. A software development method according to claim 33 **characterized in that** the testcases obtained from a particular scenario model are grouped in a test model and are hierarchically organized through relation between paths derived from the relation between the mainflow and the refinement of the scenario.

35. A software development method according to claim 34 **characterized in that** the semantic relationship between elements of the scenario model and elements of the test model, defined through a set of transition rules are implemented by a mapping algorithm.

36. A software development method according to claim 34 **characterized in that** each interaction of the path in which the user is the primary actor, is mapped with the element <ActionTobePerformed> of the test cases, while the interactions in the path in which the system is the primary actor are mapped into the <ResulExcpected> element of test cases.

37. A software development method according to claim 36 **characterized in that** if there are more interactions in the path, with the same primary actor, then the mapping algorithm will groupe them in a unique element <ActionTobePerformed > if the user is the primary actor of interaction or in <ResulExcpected> element if the system is the primay actor of interaction.

38. A software development method according to preceding claims **characterized in that** guidelines to map a scenario structure, from which the path is generated, into a testcase structure, are the following: the goal and the description of scenarios are mapped into a description of test cases; - trigger of test cases corresponds to the trigger of scenario or to an activated condition for alternative; - priority of test cases corresponds to a priority of scenario; - preconditions of scenario are mapped in test case as preRequirements.

39. A software development method according to claim 32 **characterized in that** the graphical representation of test model and test cases is obtained applying the XSLT transformation to the XML test model.

40. A software development method according to claim 39 **characterized in that** the visualization of test cases is composed of the following parts, showing respectively: - a general information for a test case, like description, test Type, author, pre-requirements, etc; - the namespaces for actors and items used in the testcase; - the last part shows the interaction flow.

41. A software development method according to claim 20 **characterized in that** it is possible to derive a precise behaviour model, based on Harel semantic and formalized through an XML schema, from each scenario model, applying a path generation algorithm and a precise mapping algorithm based on a set of transition rules between scenario model and behaviour model.

42. A software development method according to claim 41 **characterized in that** the behaviour model XML schema consists of a set of <statediagram> elements and contains one or more <state> element.

43. A software development method according to claim 42 **characterized in that** each <state> element has an id attribute specifying the unique identifier of the state in a behavior model and can contains zero or more <state> elements to support the macro-state, one or more <transition> elements and one or more <systemActions> elements that represent the actions performed by the system.

44. A software development method according to claim 43 **characterized in that** each <transition> has a number attribute specifying its unique identifier in the state diagram and contains a <state> element that specifies the name of the state reached by the transition (referenced by the ref attribute) and <event> element that contains action associated to the transition and an optional <condition> element used as guard on transitions.

45. A software development method according to claim 44 **characterized in that** the <event> element and <systemActions> have the same content of the interaction elements of scenario model.

46. A software development method according to claim 41 **characterized in that** each statediagram correspond to the path obtained by applying the path generation algoritm to the scenario accordin to claim 18,19 and defining a set of transition rules.

47. A software development method according to claim 41 **characterized in that** the semantic relationship between elements of the scenario model and elements of behaviour model, defined through a set of transition rules are implemented by a mapping algorithm.

48. A software development method according to claim 47 **characterized in that** guidelines to map scenario structure into a statediagram structure are the following:- the interaction contained in a step of scenario from which the path is generated, is translated into a state or a transition of a state diagram depending on the primary actor of the interaction: interactions that have the user as the primary actor are mapped to state transitions encapsulated in <event> element, while interactions that have the system as the primary actor are mapped as actions performed by the system and encapsulated in <systemActions> element, the transitions to final state having the attributes name as "Empty"; - the triggering event of scenario is the state transition to the initial state, where the initial state is represented with <state> element for which the attribute Name is "Start"; - preconditions are mapped in a state diagram as actions of the initial state and represent the environment requested from the scenario before to be executed; - postconditions are represented in state diagram as actions of the final state, where the final state is represented with <state> element in which the attribute Name is "Final"; - the condition in scenario, used to activate a variant, is mapped in a state diagram as condition.

49. A software development method according to claim 1 **characterized in that** the definition phase aims to construct the simple scenario of scenario model without considering the related variant flows and **in that** way defining the basic domain elements using the structure of vocabulary; the main activities performed in this phase being summarized as follows:
- the creation of the list of actors interacting with the system;
- the creation of the list of items used to interact with the system;
- the identification of scenario's goal;
- the description of a mainflow for each goal identified.

50. A software development method according to claim 1 **characterized in that** the refinement phase, aims to detail the simple scenario in order to specify the overall functionality of the system including alternatives and exceptional flow in a scenario, the main tasks accomplished during this phase being the following:
- the identification of redundant flows between scenarios, in order to abstract them defining a new scenario and include the same, using the include operator;
- the identification of extensional flows;
- the identification of exceptions/goal obstacles;
- the identification of alternatives flows.

51. A software development method according to claim 1 **characterized in that** the composition phase allows to integrate different scenarios in order to show the dependencies and interactions among the functionality of the entire system, where the main activity is to identify relation between scenarios in order to model features of the system that could not be captured when using a single scenario to describe it.

52. A software development method according to claims 49,50 and 51 **characterized in that** the definition , refinement and composition phases are grouped together in a construction phase.

53. A software development method according to claim 20 **characterized in that** the transformation phase corresponds to the process to generate the test case and statediagram views.

54. A software development method according to claim 52 **characterized in that** the validation phase allows to verify scenario model respect completeness, correctness and consistency of scenario elements created in the construction phase.
